(19) Europäisches Patentamt
European Patent Office
Office européen des brevets

(11) **EP 2 375 663 B1**

(12) **EUROPÄISCHE PATENTSCHRIFT**

(45) Veröffentlichungstag und Bekanntmachung des Hinweises auf die Patenterteilung:
**12.07.2017 Patentblatt 2017/28**

(51) Int Cl.:
***H04L 27/00*** *(2006.01)*

(21) Anmeldenummer: **11000859.6**

(22) Anmeldetag: **03.02.2011**

(54) **Verfahren zur Klassifizierung von Signalen nach der verwendeten Modulationsart**

Method for classifying signals according to the modulation type used

Procédé de classification de signaux selon le type de modulation utilisé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2010 DE 102010013637**

(43) Veröffentlichungstag der Anmeldung:
**12.10.2011 Patentblatt 2011/41**

(73) Patentinhaber: **Rohde & Schwarz GmbH & Co. KG 81671 München (DE)**

(72) Erfinder: **Scharl, Peter 81545 München (DE)**

(74) Vertreter: **Beder, Jens Mitscherlich PartmbB Patent- und Rechtsanwälte Sonnenstraße 33 80331 München (DE)**

(56) Entgegenhaltungen:
**DE-A1- 4 223 141      DE-A1- 19 746 507**
**DE-T2- 69 109 822      US-B1- 7 428 270**

• **XIANGHONG TANG ET AL: "Identification of Wavelet Modulation Based on Gaussian Detection and Kurtosis of Power Spectrum", COMMUNICATIONS AND MOBILE COMPUTING, 2009. CMC '09. WRI INTERNATIONAL CONFERENCE ON, IEEE, PISCATAWAY, NJ, USA, 6. Januar 2009 (2009-01-06), Seiten 181-185, XP031434650, ISBN: 978-0-7695-3501-2**

**Beschreibung**

Die Erfindung betrifft ein Verfahren zur Klassifizierung eines Signals hinsichtlich seiner Modulationsart. Insbesondere befasst sich die Erfindung mit der Analyse und Klassifizierung eines pulsförmigen Signals hinsichtlich einer verwendeten Intrapulsmodulation. Das Verfahren verwendet bekannte Merkmale des Signals und bewertet die Merkmale in neuer und geeigneter Weise, um eine robuste und zugleich für eine zeiteffiziente Implementierung geeignete Erkennung des verwendeten Modulationsverfahrens zu erreichen.

Ein elektronisches Analysesystem empfängt, analysiert und klassifiziert überlagerte Signale, die zu einer Mehrzahl von Empfängern gehören können. Die Signalparameter der empfangenen Signale sind zunächst unbekannt und werden aus den empfangenen Signalen mittels geeigneter Messverfahren gewonnen. Die grundsätzliche Anforderung an den Empfänger besteht zunächst darin, die Signale zu detektieren und geeignete Signalparameter zu bestimmen, mit Hilfe derer eine Zuordnung der Signale zu einzelnen Emittern möglich ist. Die einzelnen Emittern zugeordneten Signale können dann einer weiteren Auswertung zugeführt werden. In einer weiteren Auswertung kann im Fall von Kommunikationssignalen beispielsweise eine Demodulation und anschließende Analyse des Signalinhalts erfolgen.

Kurzzeitsignale sind häufig pulsförmige Radarsignale. Da für den Fall des Radarpulses zahlreiche systemtechnische Vorteile durch eine zusätzliche Modulation des Radarpulses zu erzielen sind, wird eine Intrapulsmodulation bei Pulskompressionsradaren vorgenommen. Neben linearer und nichtlinearer Frequenzmodulation ist hier insbesondere auch die Phasenmodulation in der Radartechnik bei Pulskompressionsradaren von Bedeutung. Damit stehen zusätzliche Merkmale für die Klassifizierung zu Verfügung, andererseits entstehen dadurch zusätzliche Herausforderungen für die Erkennung entsprechender Parameter für Kurzzeitsignale. Verfahren zur Erkennung und Klassifizierung von Signalen müssen entsprechende Modulationsverfahren für Signale aus Einzelpulsen oder aus einer geringen Anzahl Pulsen detektieren und zuverlässig klassifizieren können.

Für die Zuordnung von Signalen zu Emittern können Parameter wie Empfangszeit (TOA: Time Of Arrival), Empfangsrichtung (AOA: Angle Of Arrival), oder andere Parameter eines gepulsten Signals wie Pulspegel, Pulswiederholfrequenz (PRI: Pulse Repetition Interval) und Pulsdauer und gegebenenfalls eine Intrapulsmodulation verwendet werden. Zugleich können spektrale Merkmale wie Bandbreite und Mittenfrequenz für die Analyse des Empfangssignals genutzt werden. Verfahren der Zeit-Frequenz-Analyse, beispielsweise Wigner- oder Wavelet-Analyse können ebenfalls an dieser Stelle Verwendung finden. Die Erkennung und Klassifizierung der Signale kann dabei auf Basis der gemessenen und erkannten Parameter in Neuronalen Netzen erfolgen. Gemeinsam ist den verwendeten Verfahren und eingesetzten Empfängern, dass diese in einem Umfeld gekennzeichnet durch eine hohe Dichte elektromagentischer Emissionen einer Vielzahl von Emittern große Datenmengen erzeugen und zur Verarbeitung bereitstellen. Zugleich sind die zeitlichen Anforderungen an die Bereitstellung der Ergebnisse einer Signalauswertung hoch und verlangen eine Signalverarbeitung in Echtzeit. Eine aufwandsarme und kostengünstige Realisierung der Verfahren verlangt zugleich eine Implementierung der verwendeten Algorithmen auf standardisierte Bauelemente wie beispielsweise FPGAs (FPGA: Field Programmable Gate Array).

Für die Erkennung und Klassifizierung des verwendeten Modulationsverfahrens als ein charakteristischer Parameter eines zu analysierenden Signals sind verschiedene Verfahren bekannt. Aus der Druckschrift DE 197 46 507 A1 ist ein Verfahren zur Zuordnung eines Empfangssignals zu einer von mehreren Modulationsarten bekannt. Hierbei wird aus einem empfangenen Signal ein komplexes Basisbandsignal erzeugt, welches abgetastet wird. Zu der entstehenden Folge von Abtastwerten werden dessen zweite und vierte komplexwertige Potenzen sowie dessen, um seinen Gleichanteil reduziertes Betragsquadrat gebildet, bevor alle Signalformen in den Frequenzbereich transformiert werden, um entsprechende Leistungsdichtespektren zu erhalten. Eine Auswertung dieser Spektren hinsichtlich der Lage bzw. Muster von Spektrallinien erlaubt schließlich eine Entscheidung hinsichtlich der verwendeten Modulationsart.

Die DE 42 23 141 A1 zeigt eine ganz ähnliche Vorgehensweise. Die Druckschrift US 7,428,270 B1 schlägt zur Unterscheidung zwischen den Modulationsarten FM und FSK vor, einen Kurtosiskoeffizienten der Momentanfrequenz des Empfangssignals heranzuziehen. Ein solcher Koeffizient ist ein Maß für die Wölbung einer statistischen Verteilung. Der Vergleich des besagten Koeffizienten mit einem Schwellwert liefert sodann die Unterscheidung zwischen FM und FSK.

Der Artikel von Xianghong Tang et al: "Identification of Wavelet Modulation Based on Gaussian Detection and Kurtosis of Power Spectrum", Communications and Mobile Computing, IEEE, 06.01.2009, Seiten 181-185, ISBN: 978-0-7695-3501-2, zeigt die Unterscheidung zwischen nicht-gaussverteilten Einzelträgersignalen (ASK, PSK, FSK und QAM) einerseits und gaussverteilten Mehrträgersignalen (OFDM und WM) andererseits, basierend auf einem normierten Kurtosiswert des Empfangssignals sowie eines weiteren Kennwertes. Zur nachfolgenden Unterscheidung zwischen OFDM und WM Signalen wird der Kurtosiswert des Leitungsdichtespektrums des Empfangssignals herangezogen.

In der Druckschrift "Automatic Radar Waveform Recognition" (IEEE Journal of selected topics in signal processing, volume 1, No. 1, Juni 2007, J. Lunden, V. Koivunen) wird die automatische Detektion und Klassifizierung von Radarimpulsen behandelt. Die Radarimpulse werden aufgrund der Eigenschaften des verwendeten Pulskompressionsverfahrens klassifiziert.

Dabei können im Rahmen des vorgeschlagenen Verfahrens in zwei voneinander unabhängigen neuronalen Netzen die Modulationsverfahren lineare Frequenzmodulation (LFM: <u>L</u>ineare <u>F</u>requenz-<u>M</u>odulation), diskrete Frequenzmodulation (beispielsweise Costas Codes), binäre Phasenmodulation und Polyphasenmdoluation in einem ersten Netz unterschieden werden. In einem zweiten Netz werden verschiedene Verfahren der Polyphasenmodulation nach den verwendeten Codes (hier z.B. Frank Codes und die Polyphasencodes P1, P2, P3, P4) unterschieden. Die insgesamt 21 Merkmale, die beide Netzwerke nutzen, beruhen allerdings zum Teil auf einer synchronen Vorverarbeitung des Empfangssignals. Um im zweiten Netzwerk eine Klassifizierung nach einzelnen Polyphasencodes vornehmen zu können, muss im Rahmen der Signalvorverarbeitung eine Subpulsrate, d.h. die Anzahl der Phasenumtastungen pro Zeit, geschätzt werden. Die Anzahl der Merkmale und die Anforderungen an die Vorverarbeitung des zu analysierenden Signals bedeuten erheblichen Zeit- und Rechenaufwand, so dass dieses Verfahren nicht für eine Echtzeitverarbeitung wirtschaftlich nicht geeignet ist.

Es bleibt daher die Aufgabe, ein Verfahren zur zuverlässigen Erkennung und Klassifizierung der Modulationsart von Signalen zu schaffen, das für eine Echtzeitverarbeitung geeignet und zugleich in möglichst effizienter Weise auszuführen ist.

Diese Aufgabe wird durch das Verfahren zur Klassifizierung eines Signals nach Anspruch 1 sowie das Computerprogramm und Computerprogramm-Produkt gemäß Ansprüchen 9 bzw. 10 gelöst. Erfindungsgemäß erfolgt das Klassifizieren eines Signals in einer Reihe von aufeinanderfolgenden Schritten. Zunächst wird das zu analysierende Eingangssignal empfangen und ein komplexes Basisbandsignal erzeugt. Anschließend erfolgt eine Abtastung, so dass das komplexe Basisbandsignal in einer Folge von Abtastwerten vorliegt. Diese Folge von Abtastwerten wird ohne Zwischenschritt in den Frequenzbereich transformiert. Auf Basis der in den Frequenzbereich transformierten Folge von Abtastwerten wird dann ein erster Kennwert gebildet. Zusätzlich wird aus der Folge von Abtastwerten ein Zwischensignal in einem nichtlinearen Verarbeitungsschritt erzeugt. Dieses Zwischensignal, nicht zu verwechseln mit einem Zwischenfrequenzsignal, wird anschließend ebenfalls in den Frequenzbereich transformiert und im Frequenzbereich mindestens ein weiterer Kennwert aus dem Zwischensignal ermittelt. Das zu analysierende Signal wird anschließend auf Basis des mindestens ersten und mindestens einen weiteren Kennwerts hinsichtlich des verwendeten Modulationsverfahrens klassifiziert.

Die Bildung des ersten Kennwerts und der weiteren Kennwerte bzw. des mindestens einen weiteren Kennwerts stellt im erfindungsgemäßen Verfahren keinen Hypothesentest auf ein für ein Modulationsverfahren charakteristisches Spektrum dar, sondern bewertet die Veränderung der Form des Spektrums, die sich durch einen nichtlinearen Verarbeitungsschritt in der Signalverarbeitung ergibt. Ein derartiger nichtlinearer Verarbeitungsschritt wird erfindungsgemäß für die Erzeugung von Zwischensignalen verwandt. Erfindungsgemäß wird aus dem ersten Kennwert und mindestens einen weiteren Kennwert ein erster Beurteilungswert gebildet. Das für das Signal verwendete Modulationsverfahren wird durch Auswertung des mindestens einen Beurteilungwertes ermittelt. In den Unteransprüchen sind vorteilhafte Weiterbildungen des erfindungsgemäßen Verfahrens ausgeführt. Es ist dabei besonders bevorzugt, wenn der erste Kennwert und die weiteren Kennwerte Kurtosiswerte sind. Die Kurtosis ist ein Maß für die Wölbung einer statistischen Verteilung. In einer weiteren Ausführungsform des erfindungsgemäßen Verfahrens sind der erste Kennwert und die weiteren Kennwerte Koeffizienten einer diskreten Kosinustransformation (DCT: <u>D</u>iscrete <u>C</u>osinus <u>T</u>ransformation) als Maß für die Wölbung. In diesem Fall wird das abgetastete Basisbandsignal und das mindestens eine Zwischensignal vor Bilden der diskreten Kosinustransformation normiert.

Bevorzugt wird eine Ausführung des erfindungsgemäßen Verfahrens, in der der erste Kennwert und die weiteren Kennwerte zur Klassifizierung des Signals in einem Entscheidungsbaum oder in einem neuronalen Netz verwendet werden. Es können auch weitere Methoden der Musterkennung verwendet werden.

Es kann zur Klassifizierung des Signals hinsichtlich des verwendeten Modulationsverfahrens auch ein weiterer Kennwert ermittelt werden, indem die Modulationsrate des Signals bestimmt wird. Dieser weitere Kennwert kann ebenso zur Beurteilung des verwendeten Modulationsverfahrens zusammen mit noch weiteren Kennwerten herangezogen werden wie ein noch weiterer Kennwert, der durch Berechnung eines Korrelationskoeffizienten für die Momentanfrequenz gebildet wird. Die Ermittlung und Auswertung weiterer Kennwerte ist dazu geeignet, die Entscheidungssicherheit der Klassifikation hinsichtlich des Modulationsverfahrens des zu analysierenden Signals zu erhöhen. Dies ist insbesondere für Signale kurzer Dauer und Einzelpulse vorteilhaft.

Das Verfahren ist insbesondere für die Erkennung der Modulationsart bei Radarpulsen und Signalen kurzer Dauer vorgesehen. Allerdings ist die Analyse und die Klassifizierung zeitkontinuierlicher Signale mit dem erfindungsgemäßen Verfahren grundsätzlich ebenso möglich.

Das Verfahren nach Anspruch 1 ist in einer besonders bevorzugten Ausführungsform dahingehend ausgelegt, ein nichtmoduliertes Signal von einem modulierten Signal zu unterscheiden und im Falle eines modulierten Signals dieses als frequenzmoduliertes, linear frequenzmoduliertes, diskret frequenzmoduliertes, binär phasenmoduliertes oder polyphasenmoduliertes Signal zu erkennen und entsprechend korrekt zu klassifizieren.

Die Klassifizierung der Modulationsart auf Basis der Änderung von Kennwerten für das Spektrum vor und nach einem nichtlinearen Verarbeitungsschritt ist insbesondere für eine Potenzierung des Signals in dem genannten einen oder mehreren nichtlinearen Verarbeitungsschritten vorteilhaft. Diese Potenzierung vorzugsweise niederer Ordnung lässt sich besonders effizient mittels Cordic-Algorithmen in Polardarstellung für die Folge komplexer Abtastwerte umsetzen. Damit ist das Verfahren für eine effiziente Implementierung besonders geeignet, zumal eine kohärente Signalverarbeitung nicht notwendig ist. Es erlaubt zudem eine sehr robuste Klassifizierung.

Die vorstehend genannten Ausführungsformen des erfindungsgemäßen Verfahrens können in vorteilhafter Weise miteinander kombiniert werden.

Das erfindungsgemäße Verfahren ist in den Zeichnungen dargestellt und wird in der nachfolgenden Beschreibung eines Ausführungsbeispiels näher erläutert. Es zeigen:

Fig. 1a        ein Szenario mit verschiedenen Emittern und einem Empfänger;

Fig. 1b        ein Beispiel für ein empfangenes Empfangssignals an dem Empfänger;

Fig. 2         ein Diagramm zur Erläuterung der Verarbeitung eines empfangenen Eingangssignals unter Verwendung des erfindungsgemäßen Verfahrens;

Fig. 3         ein Signalflussplan des erfindungsgemäßen Verfahrens;

Fig. 4         ein Ablaufdiagramm des erfindungsgemäßen Verfahrens;

Fig. 5         ein Diagramm zur Erläuterung einer ersten Ausführungsform des erfindungsgemäßen Verfahrens unter Verwendung von Kennwerten auf Basis der Kurtosis;

Fig. 6         ein Diagramm zur Erläuterung einer zweiten Ausführung des erfindungsgemäßen Verfahrens unter Verwendung eines Kennwerts auf Basis der diskreten Kosinustransformation;

Fig. 7         ein Beispiel eines Entscheidungsbaums zur Klassifizierung von Signalen mit dem erfindungsgemäßen Verfahren;

Fig. 8a-8d     ein Beispiel für die Erkennung und Klassifizierung des Modulationsverfahrens für ein pulsförmiges Signal

Fig. 9a-9d     ein Beispiel für die Erkennung und Klassifizierung des Modulationsverfahrens für ein zweites pulsförmiges Signal;

Fig. 10        Vergleich der Kurtosis mit den Koeffizienten für die diskrete Kosinustransformation für einen gaussförmigen Puls;

Fig. 11        ein Beispiel der adaptiven Schwellenfestlegung für die Detektion einer Modulationsrate;

Fig. 12a       ein Beispiel einer Modulationsratenerkennung mittels adaptiver Schwellenfestlegung für ein pulsförmiges Signal; und

Fig. 12b       ein Beispiel einer Modulationsratenerkennung mittels adaptiver Schwellenfestlegung für ein zweites pulsförmiges Signal;

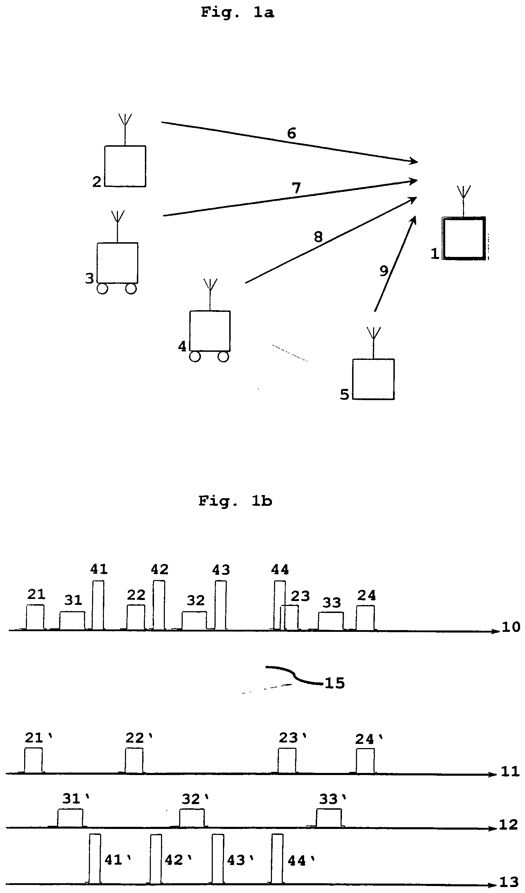

Bevor auf ein Ausführungsbeispiel des erfindungsgemäßen Verfahrens näher eingegangen wird, wird anhand der Figuren 1a und 1b das Signalszenario kurz erläutert. In Fig. 1a ist ein Empfänger 1 dargestellt. Dieser Empfänger 1 empfängt über eine Antenne die gesendeten Signale 6-9 verschiedener, im Raum verteilt angeordneter Sender 2, 3, 4 und 5. Die Sender 3 und 4 können mobile Sender sein. Die Richtung der Sender 3 und 4 bezogen auf den Empfänger 1 kann dementsprechend über die Zeit variieren. Der Empfänger 1 empfängt, wie Fig. 1b dargestellt ein Eingangssignal, das eine Überlagerung der gesendeten Signale 6, 7, 8, 9 der vorhandenen und aktiven Sender 2, 3 und 4 ist. Im Folgenden wird von Signalen 6, 7, 8 in Form von Pulsfolgen ausgegangen. Von Empfänger 1 wird also eine Eingangspulsfolge 10 empfangen. In dem Empfänger 1 ist nun zunächst die Aufgabe zu lösen, die einzelnen Pulse 21, 22, 23, 24, 31, 32,....,44 einzelnen Signalen 6-9 und damit Sendern 2-5 zuzuordnen. Dies kann in einem ersten Verarbeitungsschritt erfolgen, in dem Teile der Eingangspulsfolge 10 aufgrund bestimmter Signalmerkmale, beispielsweise Empfangsrichtung, Pulsdauer, Pulspegel oder Pulsfolgefrequenz jeweils einem den Emitter 2-5 zugeordnet werden. So wird bei der Pulssortierung (englisch: Deinterleaving) die Eingangspulsfolge 10 in Pulsfolgenteile, die einzelnen Emittern 2-5 zugeordnet sind, zerlegt. Es steht nach dem Sortieren (Deinterleaving) zur weiteren Analyse im Empfänger 1 ein Pulsfolgenteil 11 mit Pulsen 21', 22', 23', 24', die dem Sender 2 zuzuordnen sind, zu Verfügung. Ebenso kann ein anderes emitterspezifisches Pulsfolgenteil 13 bestehend aus den Pulsen 41', 42', 43', 44' weiter untersucht werden. Neben den genannten Pulsparametern kann auch das Modulationsverfahren der einzelnen Pulse 21, 22,..,44 zur Trennung der Pulse nach einzelnen Sendern 2, 3 und 4 genutzt werden. Bevorzugt wird für die Klassifizierung der empfangenen Pulse in einem zweiten Schritt auf Pulsmerkmale wie Intrapulsmodulation, Signalbandbreite oder Mittenfrequenz zurückgegriffen. Die Ergebnisse dieses zweiten Schritts der Intrapulsanalyse können dabei auch zur Bestätigung des erfolgreichen Sortierens der Eingangspulsfolge 10 in die einzelnen Emittern 2-5 zuzuordnenden Pulsfolgenteile 11, 12, 13 verwendet werden.

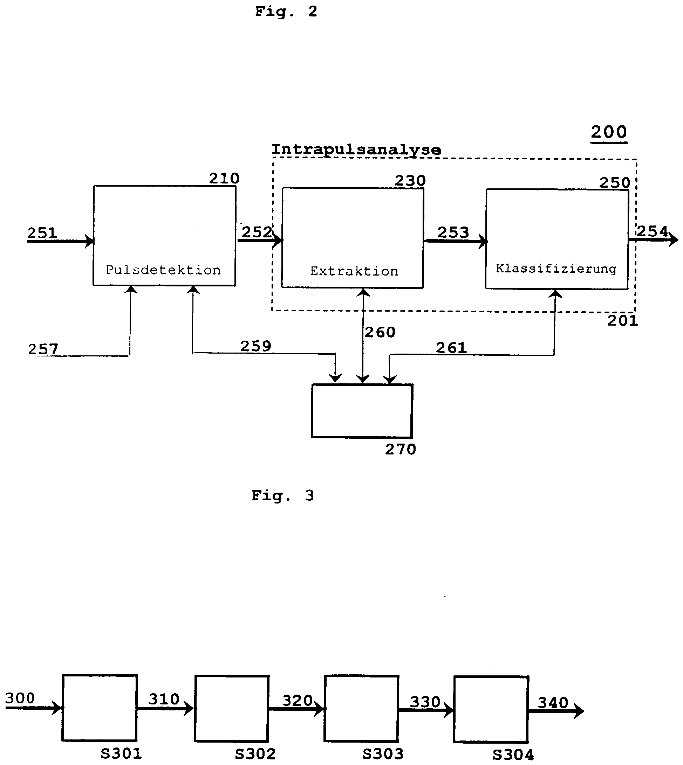

Fig. 2 stellt ein Verfahren der Klassifizierung eines Eingangssignals anhand eines einfachen Blockschaltbildes von Teilen eines automatischen Erfassungssystems 200 dar. In diesem automatischen Erfassungssystem 200 wird ein Eingangssignal 251 in einem Detektormodul 210 verarbeitet. Das Eingangssignal 251 wird dabei in vorhergehenden, in Fig. 2 nicht dargestellten Einheiten empfangen, in eine für die folgenden Verarbeitungsschritte geeignete Frequenzlage umgesetzt und zur Bildung einer Folge von Abtastwerten des komplexen Eingangssignals abgetastet. Zusätzlich stehen dem Pulsdetektormodul 210 weitere Informationen 257 zu dem Eingangssignal wie die Empfangszeit (TOA: Time Of Arrival), Empfangsrichtung (DOA: Direction Of Arrival), Empfangswinkel (AOA: Angle Of Arrival) zu Verfügung. Das Pulsdetektionsmodul 210 ermittelt die Parameter Pulsbreite und Pulsamplitude des Eingangssignals 251. Das Pulsdetektionsmodul 210 stellt für die weitere Auswertung eine komplexe Folge von Abtastwerten 252 zu Verfügung. In den Modulen 230 und 250 findet anschließend eine Intrapulsanalyse der komplexen Folge von Abtastwerten 252 statt. Die komplexe Folge von Abtastwerten 252 wird in dem nachfolgenden Extraktionsmodul 230 weiterverarbeitet. Hier werden nach dem erfindungsgemäßen Verfahren aus der komplexen Folge von Abtastwerten 252 weitere Zwischensignale gebildet und Kennwerte 253 für die Ermittlung des Modulationsverfahrens ermittelt. Diese Kennwerte 253 werden anschließend zur Beurteilung dem Klassifikationsmodul 250 zugeleitet. In dem Klassifikationsmodul 250 findet auf Basis der in dem Extraktionsmodul 230 ermittelten Kennwerte eine Entscheidung über das dem emitterspezifischen Signal des Eingangssignals 251 zugrundeliegende Modulationsverfahren statt.

Im Rahmen des Intrapulsanalyseabschnitts 201 mit den Modulen 230 und 250 werden weitere Parameter für die komplexe Folge von Abtastwerten 252 geschätzt. Diese weiteren Parameter umfassen eine Frequenzbandbreite oder eine Mittenfrequenz, die in dem Modul 230 ermittelt wird. Im Rahmen dieser Intrapulsanalyse ermöglicht das vorliegende Verfahren nach Anspruch 1 eine effiziente Klassifizierung des Signals hinsichtlich seiner Modulationsart. Die im Rahmen der Intrapulsanalyse in den Modulen 230 und 250 geschätzten Parameter dienen als Basis für ein Sortieren der Pulse (engl. Deinterleaving) des Eingangssignals 251 in einem nachfolgenden Schritt der Pulssortierung. Entscheidend für die Sortierung der Pulse ist dabei die Zuverlässigkeit der ermittelten bzw. geschätzten Parameter in den Modulen zur Pulsdetektion 210, und der Intrapulsanalyse 230 und 250. Die bei der Sortierung der Pulse nach Emittern verwendeten Verfahren, die entsprechenden Filterkriterien für die Pulssortierung und die Verwendung der Parameter für die Sortierung hängt von den Anforderungen an das jeweilige System zur automatischen Erfassung, der Zuverlässigkeit und der Messgenauigkeit der einzelnen Parameter ab. Dazu werden die Parameter üblicherweise als Teil der Pulsdaten in ein Pulsbeschreibungswort (PDW: Pulse Descriptor Word) 254 zusammengefasst. Das Klassifikations- ergebnis kann anschließend zur Darstellung für den Nutzer und zu einer weiterführenden Verarbeitung ausgegeben werden. Darüber hinaus kann mit dem Ergebnis der Klassifikation hinsichtlich der verwendeten Modulationsart das Verfahren der Pulsdetektion in Modul 210 verbessert werden. Die Speicherung der Ergebnisse 259, 260, 261 der Module 210, 230, 250 und die Steuerung die des Ablaufs findet dabei in einer Steuer- und Speichereinheit 270 statt. Die angegebenen Schritte sind selbstverständlich für alle emitterspezifischen Signale 5-9, die aus dem Eingangssignal extrahierbar sind, durchführbar. Die dem Detektormodul 210 nachfolgenden Signalverarbeitungsschritte können parallel oder nacheinander ausgeführt werden. Das erfindungsgemäße Verfahren beschreibt eine Methode zur robusten Klassifizierung eines empfangenen Eingangssignals hinsichtlich Vorliegen einer Intrapulsmodulation und gegebenenfalls Erkennung der vorliegenden Modulationsart in den Modulen 230 und 250. In der einfachsten Ausführungsform des Verfahrens kann eine Unterscheidung nach Phasenmodulation und Frequenzmodulation erfolgen. Die Verwendung und Auswertung weiterer Merkmale ermöglicht eine genauere Klassifizierung nach weiteren Modulationsarten.

In Fig. 3 werden anhand eines Ablaufdiagramms die Schritte zur Klassifikation eines Signal hinsichtlich seines Modulationsverfahrens kurz skizziert. Das empfangene Eingangssignal wird in das Basisband umgesetzt und anschließend abgetastet. Damit liegt zunächst eine Folge von komplexen Abtastwerten 300 für das empfangene Eingangssignal vor. Diese Folge komplexer Abtastwerte 300 im Basisband wird anschließend in einem Schritt S301 sortiert. Damit liegt nach Schritt S301 eine Folge von komplexen Abtastwerten 310 für ein emitterspezifisches Signal eines Emitters 2-5 vor. In Schritt S302 wird dann aus dem emitterspezifischen Signal mindestens ein Zwischensignal mittels eines nichtlinearen Verarbeitungsschritts erzeugt. Das mindestens eine Zwischensignal wird ebenso wie das Signal des Emitters 310 in den Frequenzbereich transformiert. Damit liegt nach Schritt S303 eine Folge komplexer Abtastwerte für das zu untersuchende Signal und mindestens eine Folge komplexer Werte für das mindestens eine nichtlinear erzeugte Zwischensignal im Frequenzbereich 320 vor. In Schritt S303 werden dann in geeigneter Weise Kennwerte 330 für die Folge von komplexen Abtastwerten 310 für das Signal eines Emitters 2-5 und für die Zwischensignale gebildet. Im folgenden Schritt S304 werden dann mittels der Kennwerte Beurteilungswerte gebildet und durch Auswertung der Beurteilungswerte mittels Schwellenwerten das Vorliegen eines Modulationsverfahrens 340 ermittelt.

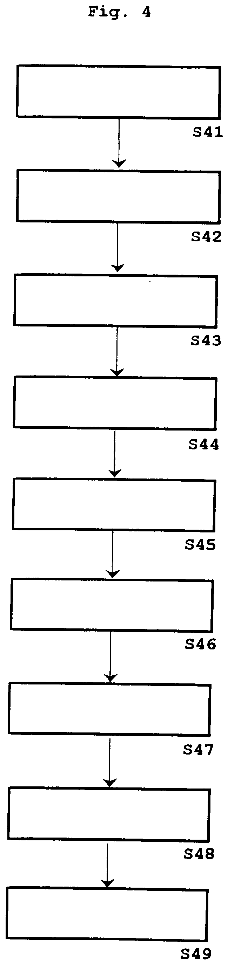

In Fig. 4 werden anhand eines Ablaufdiagramms die einzelnen Schritte des erfindungsgemäßen Verfahrens zur Klassifizierung eines Signals 251 in einer bevorzugten Ausführungsform erläutert. Das Eingangssignal 251 wird zunächst empfangen und in Schritt S41 in das Basisband umgesetzt. Anschließend wird in Schritt S42 eine Folge komplexer Abtastwerte erzeugt. Darauf wird in Schritt S43 die Folge komplexer Abtastwerte sortiert(. Es liegt damit eine Folge von Abtastwerten eines komplexen Basisbandsignals, die einem Signal bestehend aus einem Einzelpuls eines Emitters oder einer Pulsfolge eines Emitters 2-5 zuzuordnen ist, vor. Das Verfahren eignet sich grundsätzlich ebenfalls für die Analyse eines zeitkontinuierlichen Signals (CW: Continuous Wave). Das zu untersuchende Signal kann einen Nachrichteninhalt haben oder ein moduliertes oder unmoduliertes Radarsignal sein. In einem nächsten Schritt S44 werden aus der sortierten Folge von Abtastwerten, die ein emitterspezifisches komplexes Basisbandsignal darstellen, ein oder mehrere Zwischensignale erzeugt. Diese Erzeugung erfolgt in einem nichtlinearen Verarbeitungsschritt. In der vorliegenden Ausführungsform handelt es sich um ein Quadrieren des emitterspezifischen, komplexen Basisbandsignals, das einem Signal des Ermitters 2-5 zuzuordnen ist. Die nichtlineare Verarbeitung zur Erzeugung weiterer Zwischensignale kann auch die Bildung höherer Potenzen des Signals umfassen. Diese Erzeugung höherer Potenzen aus dem emitterspezifischen, komplexen Basisbandsignal ist begrenzt durch den Überabtastfaktor und durch das Verstärken des Rauschanteils im komplexen Basisbandsignal. Beträgt das Verhältnis Abtastrate zu Signalbandbreite vier, kann die vierte Potenz des Signals berechnet werden. Damit liegen für die weiteren Schritte der Klassifizierung das zu analysierende, emitterspezifische, komplexe Basisbandsignal und gegebenenfalls eine Mehrzahl von nichtlinear erzeugten Zwischensignalen jeweils als Folgen von Abtastwerten im Zeitbereich vor.

Anschließend wird in Schritt S45 die Folge der Abtastwerte des zu untersuchenden emitterspezifischen Basisbandsignals und die Folge der Abtastwerte des oder der Zwischenfrequenzsignale in den Frequenzbereich transformiert. Die Bewertung der Spektren des emitterspezifischen, komplexen Basisbandsignals und der daraus erzeugten nichtlinearen Signale erfolgt anhand von höheren Momenten. Dazu wird in einem nächsten Schritt S46 ein erster Kennwert für die komplexe Folge von Abtastwerten des emitterspezifischen, komplexen Basisbandsignals erzeugt. Dieser erste Kennwert ist in der vorliegenden Ausführung die normierte Form des vierten zentralen Moments (Kurtosis) der Folge von Abtastwerten.

Die Kurtosis als die normierte Form des vierten zentralen Moments einer statistischen Verteilung ist definiert als

$$kurt = \frac{E(x - \mu)^4}{\sigma^4} \qquad (1)$$

Dabei ist kurt die Kurtosis der Verteilung, $\sigma$ ist die Standardabweichung, $\mu$ der Mittelwert und E (x) der Erwartungswert einer statistischen Variable x. Die Kurtosis einer Verteilung ist ein Maß für die Wölbung der Wahrscheinlichkeitsdichtefunktion der Verteilung. Für den Fall einer Normalverteilung (d.h. einer Gauss'schen Glockenkurve) ergibt sich für die Kurtosis der Wert kurt=3. Es gilt damit allgemein für

Kurt > 3: Die Wölbung der Verteilung ist schmalgipfliger als eine Normalverteilung; und

Kurt < 3: Die Wölbung der Verteilung ist breitgipfliger als eine Normalverteilung.

Für eine Gleichverteilung ist die Kurtosis also stets kleiner als drei. Gleichverteilungen haben also eine geringe Wölbung. Bei linearen Skalentransformationen der Verteilung der Zufallsvariablen x ändert sich die Kurtosis, also Wölbung der zugehörigen Verteilung, nicht. Für N Abtastwerte einer vorliegenden Folge von Abtastwerten $x_i$ des emitterspezifischen komplexen Basisbandsignals ergibt sich aus (1) für die Kurtosis kurt

$$kurt = \frac{\frac{1}{N} \sum_{i=1}^{N}(x_i - \bar{x})^4}{\left(\frac{1}{N} \sum_{i=1}^{N}(x_i - \bar{x})^2\right)^2} \qquad (2)$$

dabei ist $\bar{x}$ der Mittelwert der Folge von Abtastwerten $x_i$.

Die Kurtosis als erster Kennwert interpretiert das Spektrum der Folge von Abtastwerten des zu analysierenden Signals als eine Verteilungsfunktion.

In einem nächsten Schritt S47 wird für jedes der in den Frequenzbereich überführten Zwischensignale ein Kurtosiswert als ein weiterer Kennwert gebildet. Entsprechend liegt für ein erstes in den Frequenzbereich transformiertes Zwischensignal ein zweiter Kennwert als weiterer Kennwert in Form der Kurtosis des Spektrums des ersten Zwischensignals vor. Entsprechend werden für weitere Zwischensignale, erzeugt durch nichtlineare Signalverarbeitung aus der Folge der Abtastwerte des zu analysierenden komplexen Basisbandsignals, weitere Kennwerte in Form der der Kurtosis gebildet.

In Schritt S48 wird anschließend das Modulationsverfahren anhand des ersten Kennwerts und mindestens einen weiteren Kennwerts klassifiziert. Dabei dienen der Kurtosiswert $K_1$ vor der nichtlinearen Verarbeitung des komplexen Signals und der Kurtosiswert $K_2$ nach einer nichtlinearen Verarbeitung des komplexen Signals und als Merkmal zur Klassifizierung des Signals hinsichtlich seiner Modulation. Es wird dabei die Veränderung des Spektrums bewertet, die sich für im Fall einer nichtlinearen Verarbeitung des zu untersuchenden komplexen Basisbandsignals ergibt. Diese Veränderung des Spektrums ist charakteristisch für unterschiedliche Modulationsverfahren.

Wird als erstes Zwischensignal aus dem quadrierten emitterspezifischen Basisbandsignal ein komplex quadriertes emitterspezifisches Basisbandsignal erzeugt, so verdoppelt sich für ein frequenzmoduliertes Signal der Modulationsindex. Eine Verdopplung des Modulationsindex führt zu einer Verbreiterung des Spektrums. Vergleicht man den ersten Kennwert für die Wölbung des Spektrums des emitterspezifischen komplexen Basisbandsignals mit der Kurtosis des Spektrums des komplex quadrierten emitterspezifischen Basisbandsignals als weiteren Kennwert, verringert sich in diesem Fall die Kurtosis in Folge dieser nichtlinearen Verarbeitung. Damit verändert sich die Kurtosis in Richtung einer Gleichverteilung. Dies kann in einer besonders bevorzugten Ausführungsform des Verfahrens in Schritt S49 zur Bildung eines Beurteilungswerts aus erstem und zweitem Kennwert genutzt werden

$$\frac{K_2}{K_1} < \text{thresh}_6 \qquad\qquad (3)$$

Es stellen $K_1$ (erster Kennwert) und $K_2$ (zweiter Kennwert) die Kurtosis des Spektrums des emitterspezifischen, komplexen Basisbandsignals und des ersten Zwischensignals in Form des quadrierten komplexen emitterspezifischen Basisbandsignals dar. Die Entscheidung über das Vorliegen der Frequenzmodulation wird durch Schwellenwertunterschreitung für einen Schwellenwert **thresh$_6$** getroffen, wenn der Beurteilungswert entsprechend Zusammenhang (3) zu $\frac{K_2}{K_1}$ gebildet wird.

Wird als erstes Zwischensignal aus dem emitterspezifischen Basisbandsignal ein komplex quadriertes Basisbandsignal erzeugt, so bilden sich im Fall einer binären Phasenmodulation (BPSK oder PSK2: Binary Phase Shift Keying) für den Träger und im Abstand der Modulationsrate Spektrallinien. Der Vergleich der Kurtosiswerte als erstem Kennwert für das emitterspezifische, komplexe Basisbandsignal und als zweitem Kennwert für das komplex quadrierte Basisbandsignal ergibt hier eine Vergrößerung der Kurtosis. Eine Klassifizierung des verwendeten Modulationsverfahrens kann für den Fall der PSK2 damit in einer besonders bevorzugten Ausführungsform des erfindungsgemäßen Verfahrens anhand eines Beurteilungswerts $\frac{K_2}{K_1}$ und eines Schwellenwertes **thresh$_{21}$** erfolgen

$$\frac{K_2}{K_1} > \text{thresh}_{21} \qquad\qquad (4)$$

Es stellen in der Beziehung (4) $K_1$ und $K_2$ die Kurtosis des Spektrums des emitterspezifischen, komplexen Basisbandsignals und des ersten Zwischensignals in Form des quadrierten komplexen Basisbandsignals dar. Das Signal wird als moduliert mit dem Modulationsverfahren PSK2 erkannt, wenn der hierfür charakteristische Schwellenwert **thresh$_{21}$** überschritten wird. Über die Höhe des Schwellenwerts **thresh$_{21}$** lässt sich dabei die Konfidenz beeinflussen.

Die Berechnung des Kurtosiswerts stellt im erfindungsgemäßen Verfahren keinen Hypothesentest auf ein besonderes, für ein Modulationsverfahren charakteristisches Spektrum dar, sondern bewertet die Veränderung der Form des Spektrums, die sich für einen nichtlinearen Verarbeitungsschritt in der Signalverarbeitung ergibt. Ein derartiger nichtlinearer Verarbeitungsschritt wird erfindungsgemäß für die Erzeugung von Zwischensignalen verwendet.

Der Vorteil es erfindungsgemäßen Verfahrens besteht insbesondere darin, dass die Klassifikation des Signals auf der Basis höherer Momente des Spektrums des Signals asynchron und nichtkohärent erfolgen kann. Die im Rahmen der Signalverarbeitung und Transformation in den Frequenzbereich für die Spektren der Folge komplexer Abtastwerte und der nichtlinear erzeugten Zwischensignale erzeugten Frequenzlinien können mithilfe eines Spektralschätzalgorithmus oder eines adaptiven Liniendetektors gefunden werden. Die Linien können so zur Klassifikation und Abschätzung des Modulationsparameters herangezogen werden. Wird ein Spektralschätzverfahren verwendet, das sich auf die Schnelle Fouriertransformation (Fast Fourier Transformation, abgekürzt FFT) stützt, so bestimmt die Länge der FFT L und die Form des benutzten Datenfensters die Frequenzauflösung Δf zu

$$\Delta f \approx \frac{f_{Abtastrate}}{L} \qquad\qquad (5)$$

Dabei ist $f_{Abtastrate}$ die zur Detektion der Linien im Spektrum notwendige Abtastfrequenz. Für zeitbegrenzte, pulsförmige Signale, beispielsweise Radarpulse ergeben sich grobe Werte für die Frequenzauflösung. Eine Liniendetektion ist für derartige Kurzzeitsignale häufig nicht mehr möglich. Die Bildung von Kennwerten auf Basis der Kurtosis und die Bewertung der Veränderung dieser Kennwerte und damit des Signalspektrums infolge nichtlinearer Verarbeitung der Signale nach dem erfindungsgemäßen Verfahren bietet hier Vorteile.

Eine weitere Unterteilung der mit dem erfindungsgemäßen Verfahren erkannten Modulationsverfahren ist möglich, wenn weitere Kennwerte für die Klassifikation gebildet werden. Weitere Kennwerte werden bevorzugt im Frequenzbereich gebildet. Aus dem komplex quadrierten emitterspezifischen Basisbandsignal können in weiteren nichtlinearen Verarbeitungsschritten weitere Zwischensignale erzeugt werden. Diese Zwischensignale können nach Transformation in den Frequenzbereich zur Bildung weiterer Kennwerte herangezogen werden. Es kann beispielsweise in einer Ausführungsform des erfindungsgemäßen Verfahrens die Kurtosis für die in den Frequenzbereich transformierte Folge von Abtastwerten der dritten Potenz des quadrierten emitterspezifischen Basisbandsignals gebildet werden. Es können auch weitere Kennwerte im Zeitbereich gebildet werden. So kann der Korrelationskoeffizient $R_{xy}$ genutzt werden, um eine lineare Frequenzmodulation (LFM: Linear Frequency Modulation) zu erkennen. Vorteil bei Berechnung des Koerrelationskoeffizienten ist in diesem Fall, dass hier eine genaue Parameterschätzung für ein lineares Frequenzmodell nicht erfolgen muss.

Kombiniert werden kann in besonders vorteilhafter Weise die Ermittlung von Kennwerten auf Basis der Kurtosis mit einer Schätzung der Modulationsrate (SR: Subcode Rate). Liegt ein emitterspezifisches, komplexes Basisbandsignal mit einer höherstufigen Phasenmodulation PSK vor, so sind längere Codesequenzen im Signal enthalten. Damit ist in diesem Fall eine Schätzung der Modulationsrate aus dem Spektrum des Betrages des komplexen Basisbandsignals möglich. Ein Kennwert auf Basis der Modulationsrate SR kann in vorteilhafter Weise zur Verbesserung des Klasssifikationsergebnisses für m-wertige Phasenmodulationen PSKm mit m > 4 für (SR==1) einerseits oder einer Frequenzmodulation FM andererseits (SR==0) genutzt werden.

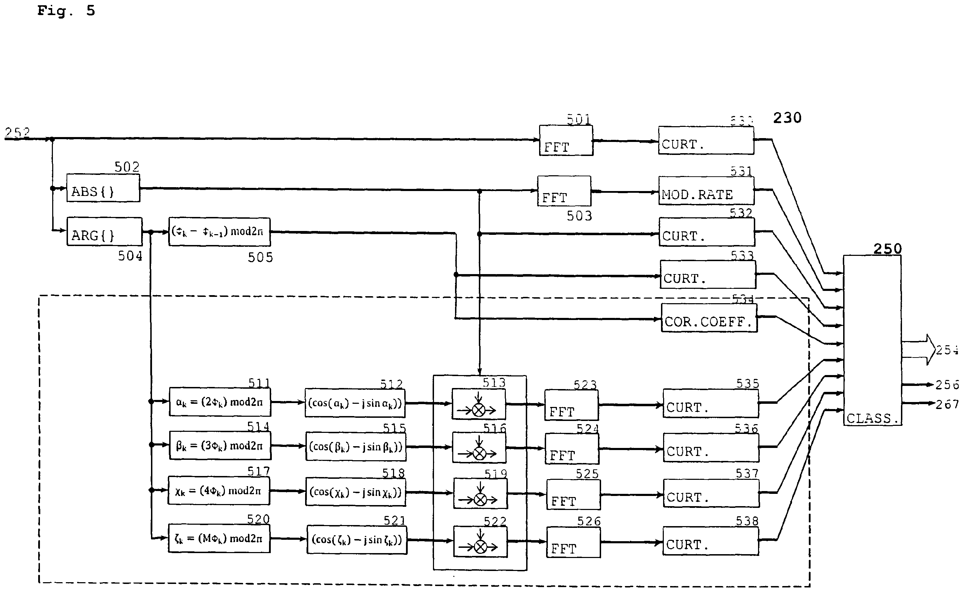

In Fig. 5 wird anhand eines einfachen Signalaufplans der Ablauf des erfindungsgemäßen Verfahrens für die Bildung der Kennwerte im Extraktormodul 230 gezeigt. Die Kennwerte werden auf Basis der Kurtosis gebildet. Dem Extraktormodul 230 wird eine Folge von komplexen Abtastwerten 252 des zu analysierenden und bereits sortierten Signals im Basisband zugeführt. Das Extraktormodul 230 stellt als Ausgangssignal die aus der Folge komplexer Abtastwerte 252 gebildeten Kennwerte dem Klassifizierungsmodul 250 zu Verfügung. Das Klassifizierungsmodul 250 entscheidet aufgrund der Kennwerte auf Vorhandensein und Erkennung des Modulationsverfahrens für das zu analysierende emitterspezifische Signal und gibt das entsprechende Klassifizierungsergebnis 254 zur Ausgabe oder Weiterverarbeitung aus. Darüber hinaus wird eine Speicherung des Klassifikationsergebnisses auf die Modulationsart in geeigneter Form innerhalb eines Pulsbeschreibungwortes (PDW: Pulse Descriptor Words) in der Steuer- und Speichereinheit vorgenommen. Innerhalb des Extraktormoduls 230 wird die Folge komplexer Abtastwerte 252 des Basisbandsignals in der Untereinheit 501 in den Frequenzbereich transformiert und anschließend in der Untereinheit 530 die Kurtosis $K_1$ des Spektrums der Folge komplexer Abtastwerte als erster Kennwert gebildet. Die Berechnung der Zwischensignale als Potenzen der Folge komplexer Abtastwerte kann einerseits in kartesischen Koordinaten erfolgen, in einer besonders bevorzugten Ausführungsform des erfindungsgemäßen Verfahrens erfolgt die Erzeugung der Zwischensignale in Polarkoordinatendarstellung der komplexen Abtastwerte. Hierzu werden in einem ersten Schritt in der Untereinheit 502 der Betrag der Folge komplexer Abtastwerte 252 und in den Untereinheiten 504 und 505 die Phase der Folge komplexer Abtastwerte ermittelt. Die Bildung der Zwischensignale vereinfacht sich in Polarkoordinatendarstellung zu einer modulo-Multiplikation in den Untereinheiten 511 für die Quadrierung, 512 für die Potenzierung mit drei, 514 für die Potenzierung mit vier und 520 für die Potenzierung mit M. Anschließend wird die Polarkoordinatendarstellung wieder in kartesische Koordinaten in den Untereinheiten 512, 515, 518, 521 und den Untereinheiten 513, 516, 519, 522 umgewandelt. Anschließend werden die erfindungsgemäß erzeugten Zwischensignale in den Untereinheiten 523-526 in den Frequenzbereich übergeführt.

Für die so erzeugten Spektren der Zwischensignale werden dann anschließend in den Untereinheiten 535-538 die Kurtosiswerte $K_2$, $K_3$, $K_4$ und $K_M$ berechnet. So wird aus dem Spektrum der ersten Folge von Werten des ersten Zwischensignals ein erster weiterer Kennwert in Form der Kurtosis $K_2$ des Spektrums der ersten Folge von Werten des ersten Zwischensignals in Untereinheit 535 gebildet. Aus dem Spektrum der zweiten Folge von Werten des zweiten Zwischensignals wird ein zweiter weiterer Kennwert in Form der Kurtosis $K_3$ des Spektrums der zweiten Folge von Werten des zweiten Zwischensignals in der Untereinheit 535 gebildet. $K_3$ ist damit als Kennwert die Kurtosis des Spektrums der dritten Potenz der Folge der komplex quadrierten Abtastwerte. $K_4$ ist als Kennwert die Kurtosis des Spektrums der vierten Potenz der Folge der komplex quadrierten Abtastwerte. $K_M$ ist als Kennwert die Kurtosis des Spektrums der M-ten Potenz der Folge der komplex quadrierten Abtastwerte. Diese Kennwerte $K_2$, $K_3$, $K_4$ und $K_M$ werden anschließend der Klassifizierungseinheit 250 zur Erkennung der verwendeten Modulationsart zugeleitet.

Die Operation der Erzeugung der Zwischensignale in nichtlinearen Verarbeitungsschritten in den Untereinheiten 511-522 kann in besonders vorteilhafter Weise mittels Cordic-Algorithmen realisiert werden.

Zusätzliche weitere Kennwerte zur Klassifizierung des Signals nach dem Modulationsverfahren werden in der in Fig. 5 dargestellten Ausführung des Extraktormoduls 230 ebenfalls ermittelt. In der Untereinheit 503 wird der Betrag $A_k$ der Folge komplexer Abtastwerte des Signals in den Frequenzbereich überführt, um in der Untereinheit 531 eine Schätzung für die Modulationsrate (SR: Subcode Rate) vorzunehmen. Diese Schätzung der Modulationsrate wird als Kennwert SR anschließend ebenso an das Klassifizierungsmodul weitergeleitet wie die Kurtosis des Spektrums des Betrages der Folge komplexer Abtastwerte des emitterspezifischen Signals als zusätzlicher weiterer Kennwert $K_0$. Aus der Phase $\Phi_k$ wird ein zusätzlicher weiterer Kennwert $K_{FM}$ ermittelt. Dieser Kennwert $K_{FM}$ ist die Kurtosis der Momentanfrequenz $\Delta\Phi_k$ der komplexen Folge von Abtastwerten. Die Momentanfrequenz $\dot{\Phi}_k$ ist die Ableitung der Momentanphase $\Phi_k$ nach der Zeit. In einer zeitdiskreten Realsierung wird die zeitliche Ableitung durch die Differenz $\Delta\Phi_k = \Phi_k - \Phi_{k-1}$ angenähert. Aus der Momentanfrequenz $\dot{\Phi}_k$ wird ein zusätzlicher weiterer Kennwert $R_{xy}$ ermittelt. Dieser Kennwert $R_{xy}$ ist der Korrelationskoeffizient der Momentanfrequenz $\dot{\Phi}_k$ der Folge komplexer Abtastwerte.

Erfindungsgemäß wird die Ordnung der FFT für die Transformation der Folge der komplexen Abtastwerte in den Untereinheiten 501, 503, 523-526 so gewählt, dass N komplexe Abtastwerte an die nächste FFT-Ordnung L mittels "Zero-Padding", also Auffüllen mit Werten Null für nicht besetzte Werte aufgefüllt werden:

$$L = \texttt{floor (log 2(N))+1} \qquad\qquad (6)$$

Die im Extraktionsmodul 230 gebildeten Kennwerte auf Basis der Kurtosis und weitere Kennwerte werden anschließend im Klassifikationsmodul 250 zur Klassifikation des zu untersuchenden komplexen Basisbandsignals genutzt.

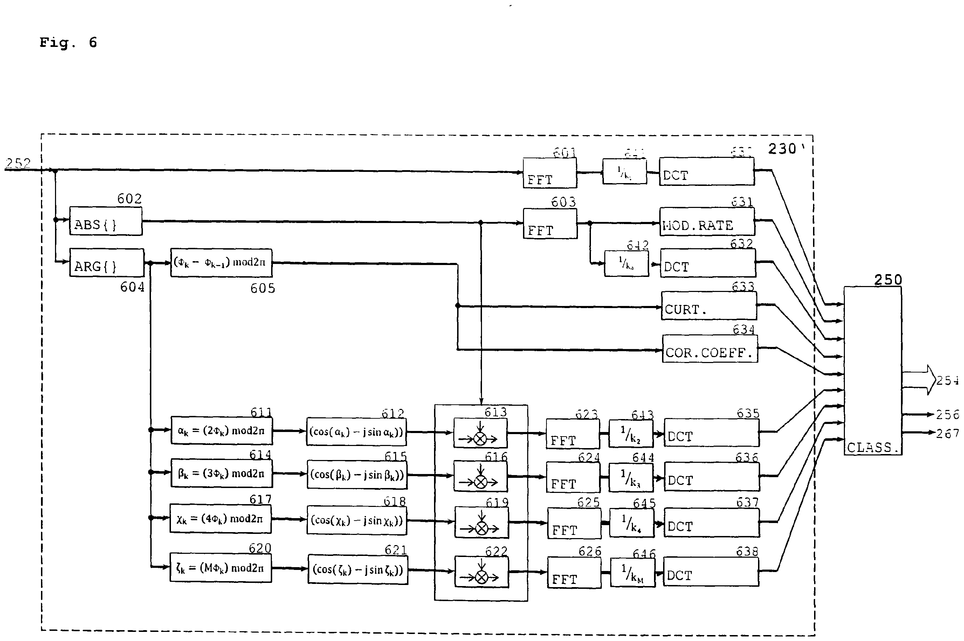

Erfindungsgemäß werden in einer weiteren Ausführungsform des Extraktionsmoduls 230' in Fig. 6 statt Kennwerten auf Basis der Kurtosis Kennwerte auf Basis des ersten Koeffizienten der Diskreten Kosinustransformation DCT verwendet. Der Aufbau des Extraktionsmoduls 230' entspricht dem Aufbau des Extraktionsmoduls 230. Statt der Ermittlung der Kurtosiswerte erfolgt eine Berechnung des ersten Koeffizienten der DCT. Zusätzlich wird das jeweilige Spektrum vor Berechnung des ersten Koeffizienten der DCT normiert.

Dem Extraktionsmodul 230' wird eine Folge von komplexen Abtastwerten 252 des zu analysierenden Signals im Basisband zu Verfügung gestellt. Das Extraktionsmodul 230' leitet die aus der Folge komplexer Abtastwerte 252 gebildeten Kennwerte dem Klassifizierungsmodul 250 weiter. Das Klassifizierungsmodul 250 entscheidet aufgrund der Kennwerte auf Vorhandensein und Erkennung des Modulationsverfahrens für das zu analysierende Signal und gibt das entsprechende Klassifizierungsergebnis 254 zur Ausgabe oder Weiterverarbeitung aus. Darüber hinaus wird eine Speicherung des Klassifikationsergebnisses hinsichtlich der Modulationsart in geeigneter Form innerhalb eines Pulsbeschreibungwortes in der Steuer- und Speichereinheit 270 vorgenommen.

Innerhalb des Extraktionsmoduls 230' wird die Folge komplexer Abtastwerte 252 des Basisbandsignals in der Untereinheit 601 in den Frequenzbereich transformiert, normiert und anschließend in der Untereinheit 630 der erste Koeffizient DC0 der DCT des Spektrums der Folge komplexer Abtastwerte als erster Kennwert gebildet. Die Berechnung der Zwischensignale als Potenzen der Folge komplexer Abtastwerte kann einerseits in kartesischen Koordinaten erfolgen, in einer besonders bevorzugten Ausführungsform des erfindungsgemäßen Verfahrens erfolgt die Erzeugung der Zwischensignale in Polarkoordinatendarstellung der komplexen Abtastwerte. Hierzu werden in einem ersten Schritt in der Untereinheit 602 der Betrag der Folge komplexer Abtastwerte 252 und in den Untereinheiten 604 und 605 die Phase der Folge komplexer Abtastwerte 252 des Basisbandsignals gebildet. Die Bildung der Zwischensignale vereinfacht sich in der Polarkoordinatendarstellung zu einer modulo-Multiplikation in den Untereinheiten 611 für die Quadrierung, 612 für die Potenzierung mit drei, 614 für die Potenzierung mit vier und 620 für die Potenzierung mit M. Anschließend wird die Polarkoordinatendarstellung wieder in kartesische Koordinaten in den Untereinheiten 612, 615, 618, 621 und den Untereinheiten 613, 616, 619, 622 umgewandelt. Anschließend werden die erfindungsgemäß erzeugten Zwischensignale in den Untereinheiten 623-626 in den Frequenzbereich überführt und in den Untereinheiten 643-646 normiert.

Für die so erzeugten Spektren der Zwischensignale werden dann in den Untereinheiten 635-638 die ersten Koeffizienten $DCO_2$, $DCO_3$, $DCO_4$ und $DCO_M$ berechnet. So wird ein erster weiterer Kennwert in Form des Koeffizienten $DCO_2$ des Spektrums der ersten Folge von Werten des ersten Zwischensignals in der Untereinheit 635 gebildet. Aus dem Spektrum der Folge von Werten des zweiten Zwischensignals wird ein zweiter weiterer Kennwert in Form des ersten Koeffizienten der DCT $DCO_3$, des Spektrums der zweiten Folge von Werten des zweiten Zwischensignals in der Untereinheit 636 gebildet, usw. Allgemein ist $DCO_M$ als Kennwert der erste Koeffizient der DCT des Spektrums der M-ten Potenz der Folge der komplex quadrierten Abtastwerte. Diese Kennwerte werden Anschließend der Klassifizierungseinheit 250 zur Erkennung der verwendeten Modulationsart zugeleitet.

Die Operation der Erzeugung der Zwischensignale in nichtlinearen Verarbeitungsschritten in den Untereinheiten 611-622 kann in besonders vorteilhafter Weise mittels Cordic-Algorithmen realisiert werden.

Zusätzliche weitere Kennwerte zur Klassifizierung des Signals nach dem Modulationsverfahren werden in der in Fig. 6 dargestellten Ausführung des Extraktionsmoduls 230' ebenfalls ermittelt. In der Untereinheit 603 wird der Betrag $A_k$ der Folge komplexer Abtastwerte des Signals in den Frequenzbereich überführt, um in einer Untereinheit 631 eine Schätzung für die Modulationsrate (englisch Subcode Rate, abgekürzt SR) vorzunehmen. Diese Schätzung der Modulationsrate wird als Kennwert SR anschließend ebenso an das Klassifizierungsmodul weitergeleitet wie der erste Koeffizient der DCT des Spektrums des Betrages der Folge komplexer Abtastwerte des Signals als zusätzlicher weiterer Kennwert $DCO_0$. Aus der Momentanfrequenz $\dot{\Phi}_k$ wird ein zusätzlicher weiterer Kennwert $K_{FM}$ ermittelt. Dieser Kennwert $K_{FM}$ ist die Kurtosis der Momentanfrequenz $\dot{\Phi}_k$ der komplexen Folge von Abtastwerten. In einer zeitdiskreten Realsierung wird die zeitliche Ableitung durch die Differenz $\dot{\Phi}_k = \Delta\Phi_k = \Phi_k - \Phi_{k-1}$ angenähert. Aus der Momentanfrequenz $\dot{\Phi}_k$ wird als zusätzlicher weiterer Kennwert $R_{xy}$ ermittelt. Dieser Kennwert $R_{xy}$ ist der Korrelationskoeffizient der Momenanfrequenz $\dot{\Phi}_k$ der komplexen Folge von Abtastwerten.

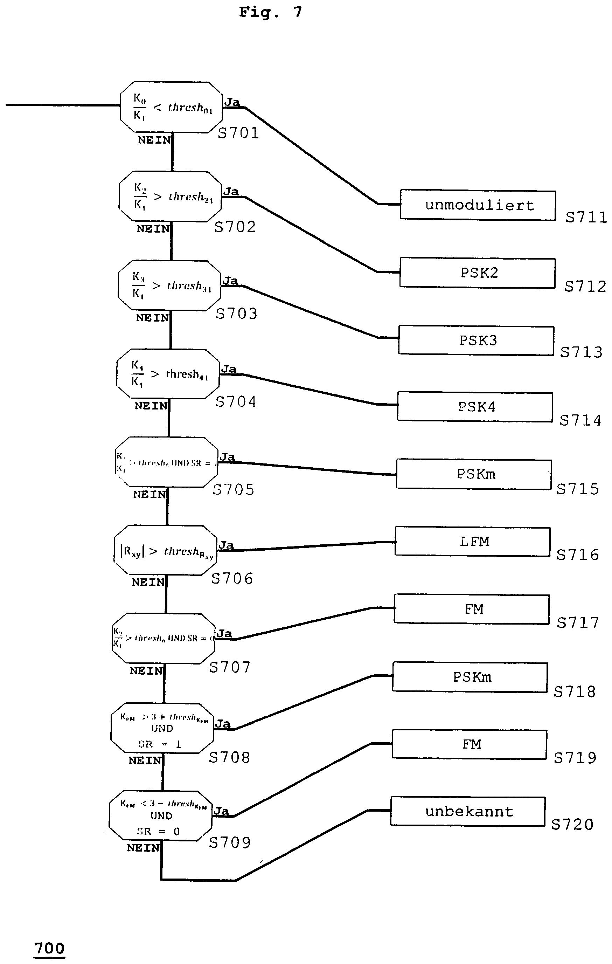

In Fig. 7 wird in einem Signalflussplan eine Ausführungsform des Schritts S303 in Fig. 3 zur Klassifizierung von Signalen nach den gebildeten Kennwerten entsprechend dem erfindungsgemäßen Verfahren dargestellt. Die gebildeten Kennwerte für ein Signal werden dazu in Form eines Entscheidungsbaums 700 ausgewertet. Dabei werden Beurteilungswerte gebildet und die Beurteilungswerte ebenso wie die Kennwerte anhand von Entscheidungsschwellen ausgewertet. Die dargestellten Schritte werden in dem Klassifizierungsmodul 230 ausgeführt. In einem ersten Schritt S701 wird zunächst geprüft, ob ein erster Beurteilungswert aus dem ersten Kennwert $K_0$ und zweitem Kennwert $K_1$ einen ersten Schwellenwert $thresh_{01}$ überschreitet:

$$\frac{K_0}{K_1} < thresh_{01} \qquad\qquad (7)$$

Dabei stellt $K_0$ die Kurtosis des in den Frequenzbereich transformierten Betrages der Folge der Abtastwerte des komplexen emitterspezifischen Signals dar. $K_1$ ist die Kurtosis des Betrags der in den Frequenzbereich transformierten Folge der komplexen Abtastwerte des Signals. Der erste Beurteilungswert ist der Quotient aus den Kennwerten $K_0$ und $K_1$, es sind aber auch andere mathematischen Operationen zur Bildung des ersten Beurteilungswertes möglich. Ist die Entscheidungsschwelle $thresh_{01}$ überschritten, so wurde ein unmoduliertes Signal erkannt. Ist der Schwellenwert $thresh_{01}$ nicht überschritten, so wird in Schritt S702 der zweite Beurteilungswert gebildet und geprüft, ob dieser zweite Beurteilungswert einen zweiten Schwellewert überschreitet:

$$\frac{K_2}{K_1} > thresh_{21} \qquad\qquad (8)$$

Der zweite Beurteilungswert bestimmt sich im vorliegenden Ausführungsbeispiel zu $\frac{K_2}{K_1}$ als Quotient aus der Kurtosis $K_2$ des Betrags des Spektrums des in einem nichtlinearen Verarbeitungsschritt erzeugten ersten Zwischensignals und der Kurtosis $K_1$ des Betrags der in den Frequenzbereich transformierten Folge der komplexen Abtastwerte. Der Schwellenwert $thresh_{21}$ dient der Beurteilung, ob eine Phasensprungmodulation PSK2 vorliegt. Ist die Schwelle überschritten, so liegt ein PSK2-moduliertes Signal vor und das Verfahren bricht mit Schritt S702 ab. Ist der Schwellenwert in Schritt S702 nicht überschritten, so wird in Schritt S703 der dritte Beurteilungswert gebildet und anhand eines geeigneten Schwellenwerts $thresh_{31}$ geprüft:

$$\frac{K_3}{K_1} > thresh_{31} \qquad\qquad (9)$$

Der dritte Beurteilungswert bestimmt sich im vorliegenden Ausführungsbeispiel zu $\frac{K_3}{K_1}$ als Quotient aus der Kurtosis $K_3$ des Betrags des Spektrums des in einem nichtlinearen Verarbeitungsschritt erzeugten zweiten Zwischensignals und der Kurtosis $K_1$ des Betrags der in den Frequenzbereich transformierten Folge der Abtastwerte des kom-

plexen Signals. Der Schwellenwert $thresh_{31}$ dient der Beurteilung, ob eine Phasensprungmodulation PSK3 vorliegt. Ist der Schwellenwert $thresh_{31}$ überschritten, so wird in Schritt S713 auf PSK3-Modulation für das untersuchte Signal entschieden und das Verfahren der Klassifizierung mit diesem Ergebnis beendet. Ist der Schwellenwert in S703 nicht überschritten, so wird in Schritt S704 der vierte Beurteilungswert gebildet und anhand eines geeigneten Schwellenwerts $thresh_{41}$ geprüft:

$$\frac{K_4}{K_1} > thresh_{41} \qquad\qquad (10)$$

Der vierte Beurteilungswert bestimmt sich im vorliegenden Ausführungsbeispiel zu $\frac{K_4}{K_1}$ als Quotient aus der Kurtosis $K_4$ des Betrags des Spektrums des in einem nichtlinearen Verarbeitungsschritt erzeugten dritten Zwischensignals und der Kurtosis $K_1$ des Betrags der in den Frequenzbereich transformierten Folge der Abtastwerte des komplexen Signals. Der Schwellenwert $thresh_{41}$ dient der Beurteilung, ob eine Phasensprungmodulation PSK4 vorliegt. Ist der Schwellenwert $thresh_{41}$ überschritten, so wird in Schritt S714 auf PSK4-Modulation für das untersuchte Signal entschieden und das Verfahren der Klassifizierung mit dem Ergebnis "PSK4" beendet. Ist der Schwellenwert in Schritt S714 nicht überschritten, so wird in Schritt S705 der erste Beurteilungswert gebildet, anhand eines geeigneten Schwellenwerts $thresh_5$ geprüft und zugleich geprüft, ob die Modulationsrate SR des Betrages des Spektrums des komplexen Signals den Wert Eins annimmt:

$$\frac{K_2}{K_1} > thresh_5 \text{ UND } SR = 1 \qquad\qquad (11)$$

Sind diese beiden Bedingungen erfüllt, so liegt ein PSKm - moduliertes Signal vor und die Klassifizierung wird mit diesem Ergebnis in Schritt S715 beendet. Ist diese Bedingung nicht erfüllt, so wird mit Schritt S706 fortgefahren. In Schritt S706 wird ein sechster Beurteilungswert $|R_{xy}|$ bestehend aus dem Betrag des Korrelationskoeffizienten $|R_{xy}|$ gebildet und mittels eines sechsten Schwellenwerts $thresh_{R_{xy}}$ geprüft.

$$|R_{xy}| > thresh_{R_{xy}} \qquad\qquad (12)$$

Ist die Bedingung (10) erfüllt, so wird in Schritt S716 das Verfahren der Klassifizierung des Signals mit dem Ergebnis Lineare Frequenzmodulation LFM beendet. Ist die Bedingung (10) nicht erfüllt, wird das Verfahren mit Schritt S707 fortgesetzt. In Schritt S707 wird der erste Beurteilungswert $\frac{K_2}{K_1}$ gebildet, anhand eines geeigneten Schwellenwerts $thresh_6$ geprüft und zugleich geprüft, ob die Modulationsrate SR des Betrages des Spektrums des komplexen Signals den Wert Null annimmt:

$$\frac{K_2}{K_1} > thresh_5 \text{ UND } SR = 0 \qquad\qquad (13)$$

Sind diese beiden Bedingungen erfüllt, so liegt ein frequenzmoduliertes Signal vor und die Klassifizierung wird mit dem Ergebnis FM in Schritt S716 beendet. Ist die Bedingung (11) nicht erfüllt, so wird das Verfahren in Schritt S708 fortgesetzt. Ist in Schritt S708 die Bedingung

$$K_{FM} > 3 + thresh_{K_{FM}} \text{ UND } SR = 1 \qquad\qquad (14)$$

erfüllt, wird das Verfahren in Schritt S718 mit dem Ergebnis PSKm beendet. Dabei ist $K_{FM}$ die Kurtosis des Momentanfrequenzverlaufs des zu untersuchenden Signals und $thresh_{K_{FM}}$ ein geeigneter Schwellenwert. SR ist die Modulationsrate des zu untersuchenden Signals. Andernfalls wird das Verfahren in Schritt S709 fortgesetzt. In Schritt S709 wird die Bedingung

$$K_{FM} < 3 - thresh_{K_{FM}} \text{ UND } SR = 0 \qquad\qquad (15)$$

geprüft. Ist diese Bedingung (13) erfüllt, so liegt ein frequenzmoduliertes Signal vor und das Verfahren wird mit der entsprechenden Klassifizierung "FM" in Schritt S719 beendet. Ist diese Bedingung (13) nicht erfüllt, so wird das Verfahren der Klassifizierung in Schritt S720 mit der Klassifizierung "unbekanntes Modulationsverfahren" beendet.

Der in Fig. 7 beschriebene Ablauf des Klassifizierung des zu untersuchenden Signals ist für Kennwerte geschildert, die auf der Kurtosis der Spektren des zu untersuchenden Signals und einer Mehrzahl von Zwischensignalen beruhen. Das in den Schritten S701 bis S720 beschriebene Verfahren ist ebenso auch für Kennwerte durchführbar, die auf anderen Parametern zur Beschreibung der Spektren von zu untersuchendem Signal und Zwischensignalen beruhen, ausführbar. Insbesondere können anstelle der Kurtosiswerte auch Koeffizienten der Diskreten Kosinustransformation DCT verwendet werden. Die Schwellenwerte für eine Entscheidung im Rahmen der Klassifikation können auf unterschiedliche Art und Weise gewonnen werden. Die Schwellenwerte **thresh₀₁, thresh₂₁, ... , threshRxy** können durch Simulation bestimmt werden. Geeignete Schwellenwerte können ebenfalls durch Training der Klassifikationseinheit 250 mittels Signalen mit bekannten Modulationsverfahren und bekannten Signaleigenschaften ermittelt werden.

In Fig. 7 wird die Entscheidung im Klassifikationsmodul 230 mittels sequentieller Bildung von Beurteilungswerten und Prüfen der Beurteilungswerte mittels Schwellenwerten getroffen. Das Verfahren ist allerding ebenso ausführbar, wenn die Bildung der Beurteilungswerte und das Prüfen der Beurteilungswerte mittels Schwellenwerten parallel erfolgt. Für diesen Fall liegt für jeden Schritt S711 bis 720 parallel ein Ergebnis mit dem Wert "Ja" oder "nein" vor.

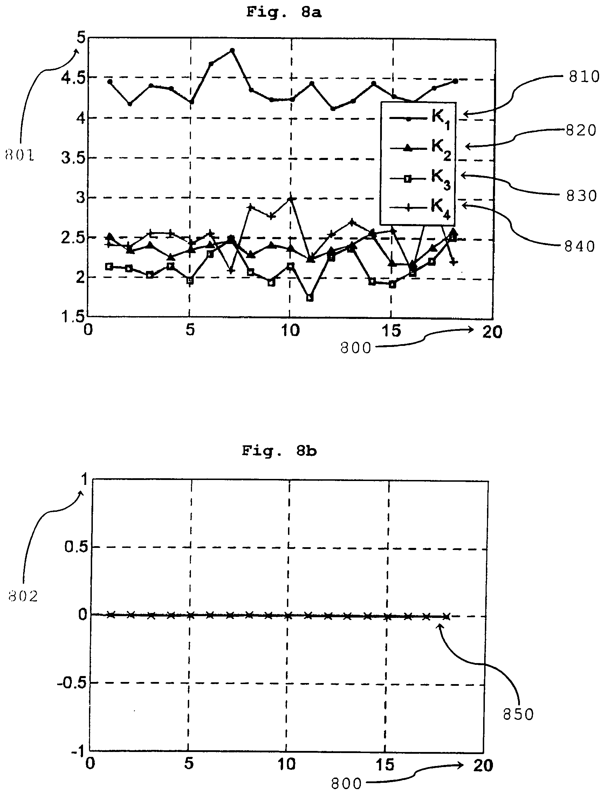

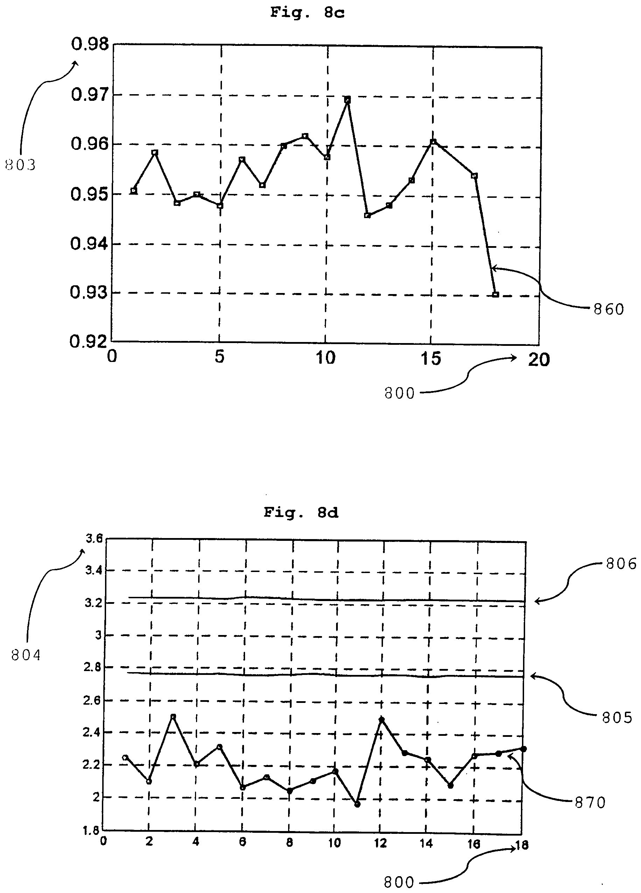

Anhand zweier pulsförmiger Signale soll nun die Klassifizierung des Modulationsverfahrens beispielhaft erläutert werden. In Fig. 8a bis 8d wird ein linear frequenzmodulierter Puls mit einer Pulsdauer PW=10μs und einer Frequenzbandbreite von BW=10 MHz untersucht. Es handelt sich um einen sogenannten Frequenzchirp. Dabei werden ein erster Kennwert und die weiteren Kennwerte für eine Anzahl von 18 detektierten Pulsen eines emitterspezifischen Signals gebildet. In Fig. 8a werden die Kennwerte $K_1, K_2, K_3, K_4$ für 18 Pulse dargestellt. Dabei sind in horizontaler Richtung 800 die Anzahl der Pulse und auf der vertikalen Achse 801 der Wert der Kennwerte aufgetragen. Die Kennwerte $K_1, K_2, K_3, K_4$ werden auf Basis der Kurtosis gebildet. Es bezeichnet dabei 810 den Wert des ersten Kennwerts $K_1$. $K_1$ ist die Kurtosis der in den Frequenzbereich transformierten Folge von Abtastwerten des zu klassifizierenden Pulses. 820 ist der Kennwert $K_2$ der nichtlinear verarbeiteten und anschließend in den Frequenzbereich transformierten Folge von Abtastwerten des zu klassifizierenden Pulses. In diesem Fall ist die nichtlineare Verarbeitung das Bilden eines quadrierten Signals, um ein erstes Zwischensignal zu erzeugen. 830 bezeichnet den Kennwert $K_3$ der nichtlinear verarbeiteten und anschließend in den Frequenzbereich transformierten Folge von Abtastwerten des zu klassifizierenden Pulses. In diesem Fall ist die nichtlineare Verarbeitung das Bilden der dritten Potenz des quadrierten Signals. Mit diesem Schritt entsteht ein zweites Zwischensignal. 840 bezeichnet den Kennwert $K_4$ der nichtlinear verarbeiteten und anschließend in den Frequenzbereich transformierten Folge von Abtastwerten des zu klassifizierenden Pulses. Für diesen Fall ist die nichtlineare Verarbeitung das Bilden einer vierten Potenz des zu klassifizierenden Signals. Durch diesen Verarbeitungsschritt entsteht ein drittes Zwischensignal. In Fig. 8b ist die Modulationsrate **SR** 850 für die 18 Pulse dargestellt. Dabei sind in Fig. 8b in horizontaler Richtung 800 die Anzahl der Pulse und auf der vertikalen Achse 802 der Wert der Modulationsrate **SR** aufgetragen. In Fig. 8c ist der Korrelationskoeffizient 860 $R_{xy}$ für die 18 Pulse dargestellt. Dabei sind in horizontaler Richtung 800 die Anzahl der Pulse und auf der vertikalen Achse 803 der Wert des Korrelationskoeffizienten 860 aufgetragen. In Fig. 8d ist der Kennwert $K_{FM}$ 870 für die Momentanfrequenz für die 18 Pulse dargestellt. Dabei sind in Fig. 8d in horizontaler Richtung 800 die Anzahl der Pulse und auf der vertikalen Achse 804 der Wert des Kennwerts $K_{FM}$ 870 aufgetragen. Zusätzlich enthält Fig. 8d ein Intervall um den Wert 3 mit einer unteren Grenze 805 und einer oberen Grenze 806.

Diese Grenzen 805, 806 stellen eine Abgrenzung zu dem Kurtosiswert 3 für eine Normalverteilung dar.

Die in Fig. 8a bis Fig. 8d dargestellten Kennwerte **K₁, K₂, K₃, K₄, KFM, SR** und **Rxy** werden nun in einem Entscheidungsbaum nach Fig. 7 ausgewertet. Es gilt dabei in Fig. 8a **K₁ > K₂**, so dass das Verhältnis **K₂/K₁** klein ist. Dies ist signifikant für ein frequenzmoduliertes Signal. Zudem liegt der Kennwert **KFM** 860, gebildet als Kurtosiswert der Momentanfrequenz, im Bereich einer Gleichverteilung. Die Symbolrate SR 850 ist Null und der Korrelationskoeffizient **Rxy** 860 ist stets größer als 0.9, so dass eine lineare Frequenzmodulation für dieses Signal zuverlässig aus den dargestellten Kennwerten und unter Heranziehung der Beurteilungswerte entsprechend Fig. 7 erkannt wird. Es gilt zusätzlich in Fig. 8a **K₁ > K₃** und **K₁ > K₄** , so dass das Verhältnis **K₃/K₁** und **K₄/K₁** stets klein ist. In Verbindung mit der Modulationsrate 850 SR=0 werden die Modulationsverfahren PSK2, PSK3, PSKm oder ein unmoduliertes Signal ebenso zuverlässig ausgeschlossen.

Die Schwellenwerte für eine Entscheidung auf Basis der Beurteilungswerte beziehungsweise Kennwerte können auf unterschiedliche Art gewonnen werden. Die Schwellenwerte können zum einen durch Simulation geeigneter Signale und Bilden der Kennwerte für diese Signale bestimmt werden.

Die Schwellenwerte können ebenfalls durch Training der Klassifikationseinheit 250 mittels Signalen mit bekannten Modulationsverfahren und bekannten Signaleigenschaften ermittelt werden.

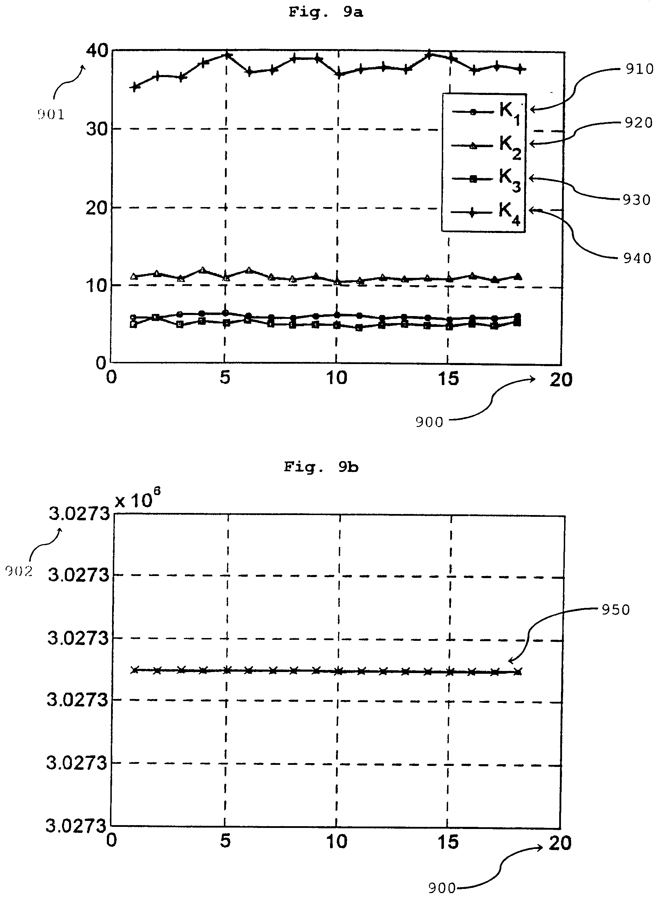

In Fig. 9a bis 9d wird ein Puls, moduliert mit einem Polyphasencode P1, mit N=4, einer Modulationsrate SR=3MHz untersucht. Ein Beispiel für einen solchen P1-Code mit $N^2$ Subpulsen stellt Formel (16) dar

$$\phi_{i,j} = \frac{-\pi}{N} [N - (2j - 1)][(j - 1)N + (i - 1)] \quad i = 1, 2, \dots N \; und \; j = 1, 2, \dots N \; (16)$$

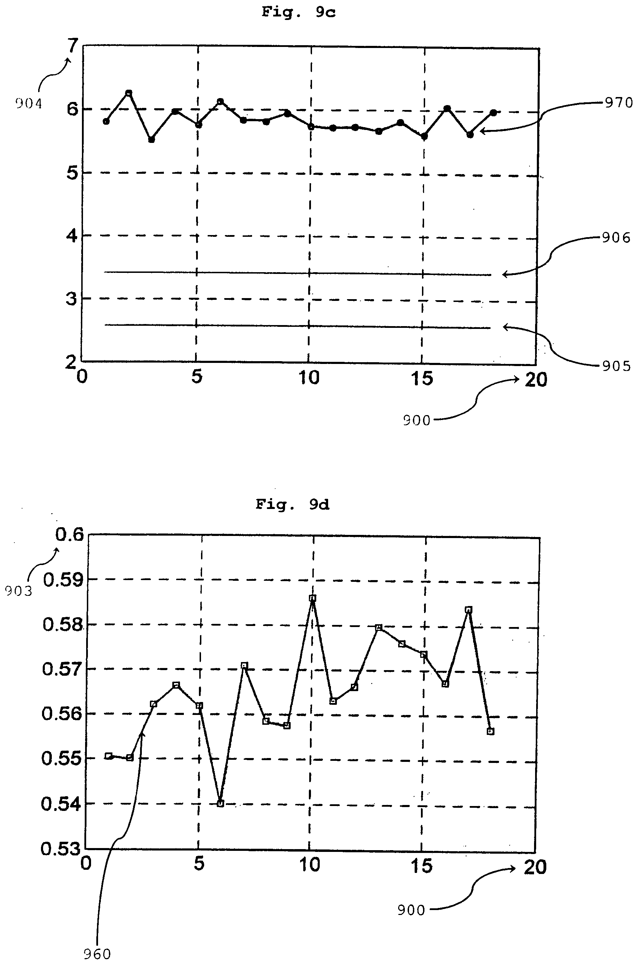

Dabei werden die Kennwerte für eine Anzahl von 18 detektierten Pulsen gebildet. In Fig. 9a werden die Kennwerte $K_1, K_2, K_3, K_4$ für 18 Pulse dargestellt. Dabei sind in horizontaler Richtung 900 die Anzahl der Pulse und auf der vertikalen Achse 901 der Wert der einzelnen Kennwerte aufgetragen. Die Kennwerte $K_1, K_2, K_3, K_4$ werden auf Basis der Kurtosis gebildet. Es bezeichnet dabei 910 den Wert des ersten Kennwerts $K_1$. $K_1$ ist die Kurtosis der in den Frequenzbereich transformierten Folge von Abtastwerten des zu klassifizierenden Signals. 920 ist der Kennwert $K_2$ der nichtlinear verarbeiteten und anschließend in den Frequenzbereich transformierten Folge von Abtastwerten des zu klassifizierenden Signals. In diesem Fall ist die nichtlineare Verarbeitung das Bilden eines quadrierten Signals. 930 bezeichnet den Kennwert $K_3$ der nichtlinear verarbeiteten und anschließend in den Frequenzbereich transformierten Folge von Abtastwerten des zu klassifizierenden Signals. In diesem Fall ist die nichtlineare Verarbeitung das Bilden der dritten Potenz des quadrierten Signals. 940 ist der Kennwert $K_4$ der nichtlinear verarbeiteten und anschließend in den Frequenzbereich transformierten Folge von Abtastwerten des zu klassifizierenden Signals. In diesem Fall ist die nichtlineare Verarbeitung das Bilden einer vierten Potenz des Signals. Durch diesen Verarbeitungsschritt entsteht ein viertes Zwischensignal. In Fig. 9b ist die Modulationsrate **SR** 950 für die 18 Pulse dargestellt. Dabei sind in Fig. 9b in horizontaler Richtung 800 die Anzahl der Pulse und auf der vertikalen Achse 902 der Wert der Modulationsrate **SR** aufgetragen. Die Modulationsrate beträgt konstant 3,0273 MHz. In Fig. 9c ist der Kennwert $K_{FM}$ 970 für die Momentanfrequenz für die 18 Pulse dargestellt. Dabei sind in Fig. 9c in horizontaler Richtung 900 die Anzahl der Pulse und auf der vertikalen Achse 904 der Wert des Kennwerts $K_{FM}$ 970 aufgetragen. Zusätzlich enthält Fig. 9d mit der unteren Grenze 905 und er oberen Grenze 906 ein Intervall um den Wert 3. Dieses Intervall enthält den Bereich eines Kurtosiswerts einer Normalverteilung. In Fig. 8d ist der Korrelationskoeffizient 960 $R_{xy}$ für die 18 Pulse dargestellt. Dabei sind in horizontaler Richtung 900 die Anzahl der Pulse und auf der vertikalen Achse 903 der Wert des Korrelationskoeffizienten 960 aufgetragen.

Die in Fig. 9a bis Fig. 9d dargestellten Kennwerte $K_1$, $K2$, $K3$, $K_4$, $K_{FM}$, **SR** und $R_{xy}$ werden nun in einem Entscheidungsbaum nach Fig. 7 ausgewertet. Es gilt dabei in Fig. 9a $K_4 > K_1$, so dass das Verhältnis $K_4/K_1$ groß ist. Dies ist signifikant für ein PSK4-moduliertes Signal. Zudem liegt der Kennwert $K_{FM}$ 960, gebildet als Kurtosiswert der Momentanfrequenz, deutlich außerhalb des Bereichs einer Gleichverteilung. Zusätzlich deuten die Kurtosiswerte deutlich größer 3 auf eine impulsartige Struktur des untersuchten Signals und damit auf Phasensprünge hin. Die Symbolrate SR 950 ist konstant von Null verschieden und der Korrelationskoeffizient $R_{xy}$ 860 ist stets kleiner als 0.9, so dass eine PSK4-Modulation für dieses Signal zuverlässig aus den dargestellten Kennwerten und unter Heranziehung der Beurteilungswerte entsprechend Fig. 7 erkannt wird. Es gilt zusätzlich in Fig. 9a $K_1 \approx K3$ und $K_1 \approx K_2$, so dass das Verhältnis $K_3/K_1$ und das Verhältnis $K_2/K_1$ stets etwa 1 ist. In Verbindung mit der Modulationsrate 950 SR # 0 werden die Modulationsverfahren FM, LFM, PSK2, PSK3, PSKm oder ein unmoduliertes Signal ebenso zuverlässig ausgeschlossen. Auch hier gilt das bei der Erläuterung zu Fig. 8 bereits Gesagte, dass die Entscheidungsschwellen einerseits durch Simulation oder andererseits mittels Training des Klassifikationsmoduls 230 mittels Signalen bekannter Parameter oder durch eine Kombination beider Vorgehensweisen erfolgen kann. Die Auswertung der Kennwerte kann ebenso mit den Methoden und Werkzeugen der Mustererkennung erfolgen.

In einer bereits geschilderten alternativen Ausführungsform des erfindungsgemäßen Verfahrens werden der erste Kennwert und der mindestens eine weitere Kennwert zur Beurteilung der Veränderung der Spektren des zu klassifizierenden Signals bei einer nichtlinearen Verarbeitung des Signals in einer zweiten Form gebildet. Diese zweite Form nutzt als Kennwerte den ersten Koeffizienten DC0 der Diskreten Kosinustransformation DCT. Die DCT ist eine lineare, orthogonale Transformation, die vergleichbar der Diskreten Fouriertransformation (DFT) ein zeitdiskretes Signal vom Zeitbereich in den Frequenzbereich transformiert und ist folgendermaßen definiert

$$y(k) = \alpha(k) \sum_{n=0}^{N-1} x(n) \cos\left(\frac{\pi(2n+1)k}{2N}\right) \qquad (17)$$

mit k = 0, 1, ...,N-1 , den Koeffizienten y(k) der DCT und der Konstanten $\alpha(k)$

$$\alpha\,(k) = \begin{cases} \sqrt{\dfrac{1}{N}} & \text{für } k = 0 \\[2em] \sqrt{\dfrac{2}{N}} & \text{für } k \neq 0 \end{cases} \tag{18}$$

Der erste Koeffizient DC0=y(0) der Kosinustransformation DCT ist ein Maß für die Flachheit des Spektrums, für das der Koeffizient berechnet wird. Damit ist der Koeffizient DC0 in vergleichbarer Weise für die Beurteilung des Spektrums des zu klassifizierenden Signals beziehungsweise der zu klassifizierenden Folge von Abtastwerten des Signals wie die Kurtosis geeignet. Zu beachten ist dabei, dass das Spektrum vor Ermitteln des ersten Koeffizienten der DCT normiert wird. Der erste Koeffizient DC0 der DCT nimmt mit zunehmender Flachheit des Spektrums, für das er berechnet wird, zu. Er verhält sich in dieser Hinsicht gegensinnig zu dem Wert der Kurtosis, der mit zunehmender Flachheit des Spektrums, für das er berechnet wird, abnimmt.

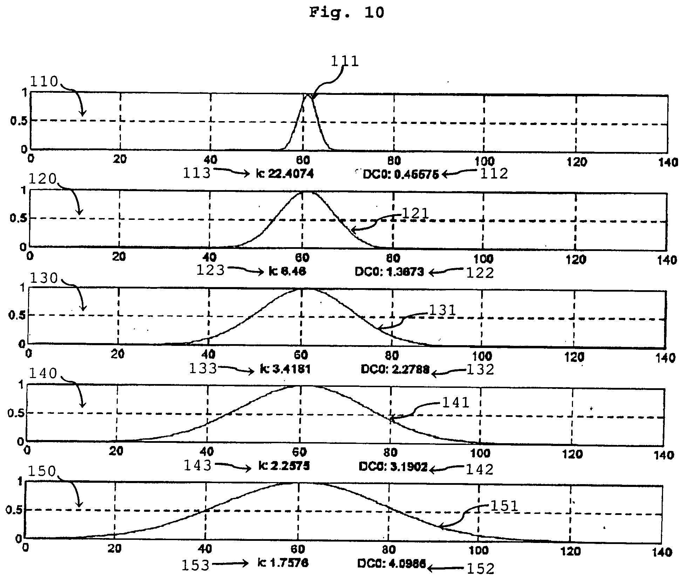

In Fig. 10 wird anhand eines Beispiels für Spektren ein Vergleich zweier Ausführungsformen des Kennwertes zur Beurteilung der Spektren des zu analysierenden Signals dargestellt. Hierzu wird ein Gausspuls mit unterschiedlichem Zeit-Bandbreite-Produkt B·T betrachtet. Dieses beispielhafte Signal weist ein gaussförmiges Spektrum auf. In den Darstellungen 110, 120, 130, 140, 150 wird dieses gaussförmige Spektrum mit zunehmender Flachheit dargestellt. Für jede der Verteilungen 110, 120, 130, 140, 150 werden jeweils ein Kennwert auf Basis einer Kurtosis der Verteilung und ein Kennwert auf Basis des ersten Koeffizienten y(0) = DC0 der Diskreten Kosinustransformation DCT berechnet. Der Kennwert 113 auf Basis der Kurtosis der Gaussverteilung 111 beträgt in der Darstellung 110 K=22,4074. Der Kennwert 112 auf Basis des ersten Koeffizienten der DCT nimmt in der Darstellung 110 den Wert 122 DC0=0,45576 an. Der Kennwert 153 auf Basis der Kurtosis der Gaussverteilung 151 beträgt in der Darstellung 110 K=1,7576. Der Kennwert 152 auf Basis des ersten Koeffizienten der DCT nimmt in der Darstellung 150 den Wert 152 DC0=4,0986 an. Vergleicht man die Werte des Kennwerts auf der Basis der Kurtosis 113, 123, 133, 143, 153 für die Darstellungen 110-150, so erkennt man, dass mit zunehmender Flachheit der gaussförmigen Spektren der Kennwert auf der Basis der Kurtosis abnimmt. Der Kennwert auf Basis des ersten Koeffizienten der DCT nimmt hingegen mit zunehmender Flachheit der gaussförmigen Spektren zu. Sowohl der Kennwert auf Basis der Kurtosis als auch der Kennwert auf Basis des ersten Koeffizienten der Diskreten Kosinustransformation sind daher zur Beurteilung der Flachheit beziehungsweise der Steilheit der Spektren geeignet. Die Kennwerte entwickeln sich allerdings bei Veränderungen der Steilheit der Spektren gegensinnig. Dies kann bei der Festlegung der Beurteilungswerte und der Entscheidungsschwellen in der Klassifizierungseinheit 250 in geeigneter Weise berücksichtigt werden.

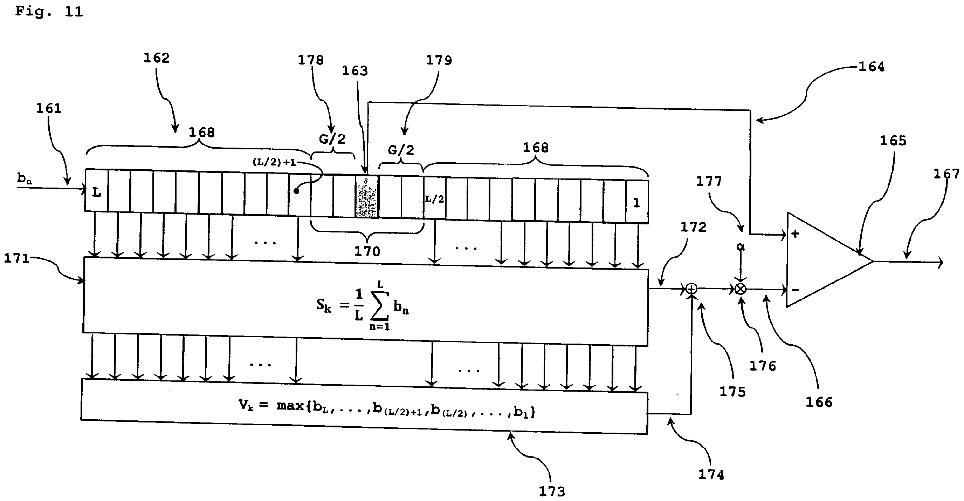

Zur Bestimmung der Modulationsrate (Symbolrate) des zu analysierenden Signals ist eine Schwellwertentscheidung notwendig. In Fig. 11 wird ein Ausführungsbeispiel einer Erzeugung eines adaptiven Schwellenwerts gezeigt. Das verwendete Verfahren ist aus dem in der Radartechnik verwendeten Verfahren zur Sicherstellung einer konstanten Falschalarmrate (CFAR: Constant False Alarm Rate) abgeleitet. Bei diesem Verfahren wird die spektrale Leistung benachbarter Zellen ermittelt und aus der den ermittelten Werten ein Schwellenwert gebildet. Die zur Ermittlung des Schwellenwerts herangezogenen Zellen liegen in einem Beobachtungsfenster werden nach folgenden Kriterien bestimmt.

In die Ermittlung der Entscheidungsschwelle sollen keine spektralen Linien eingehen, um den Schwellenwert nicht zu hoch zu legen. Daher wird das Beobachtungsfenster einen Abstand (Schutzzellen) zu der Zelle aufweisen, für die der Schwellenwert ermittelt wird. Das Beobachtungsfenster darf nicht zu groß gewählt werden, um sicherzustellen, dass benachbarte Spektrallinien nicht in die Ermittlung der Schwellenwerts und damit in die Entscheidung über die Modulationsrate eingehen.

In Fig. 11 wird die Ermittlung des Schwellenwerts dargestellt. Die spektralen Leistungswerte 161 werden durch ein Schieberegister 162 der Länge N geschoben. Für die Zelle 163 wird über eine Anzapfung der entsprechende Wert 164 der Zelle zu einem Vergleicher 165 geführt. In diesem Vergleicher 165 wird der Wert 165 für diese Zelle mit einer Schwellenwert 166 verglichen und das Ausgangssignal 167 des Vergleichers 165 gibt an, ob der Wert 164 der Zelle 163 den Schwellenwert 166 überschreitet ( SR=1) oder unterschreitet (SR=0). Der Schwellenwert 166 wird ausgehend durch Mittelung der Werte der aus den einzelnen Zellen des Schieberegisters 162 innerhalb eines Beobachtungsfensters 168 ermittelt. Dazu werden alle Werte des Schieberegisters 162, außer dem Wert der Zelle 163, die den zu entscheidenden Wert enthält, und den Werten aus einem Schutzbereich 170 um die zu entscheidende Zelle 163 herangezogen. Der Schutzbereich 170 umfasst die G Zellen, die symmetrisch um die zu entscheidende Zelle 163 liegen. Zusätzlich wird für die Ermittlung des Schwellenwerts 166 der größte Wert 174 aus dem Beobachtungsfenster 168 herangezogen. Die Bestimmung des Schwellenwerts 166 erfolgt durch Addition 175 des größten Werts 174 aus dem Beobachtungsfenster mit dem Mittelwert 172 aller Zellen des Beobachtungsfensters 168. Nach der Addition 175 kann noch eine Gewichtung mittels Multiplikation 176 mit einem Gewichtungsfaktor $\alpha$ 177 erfolgen.

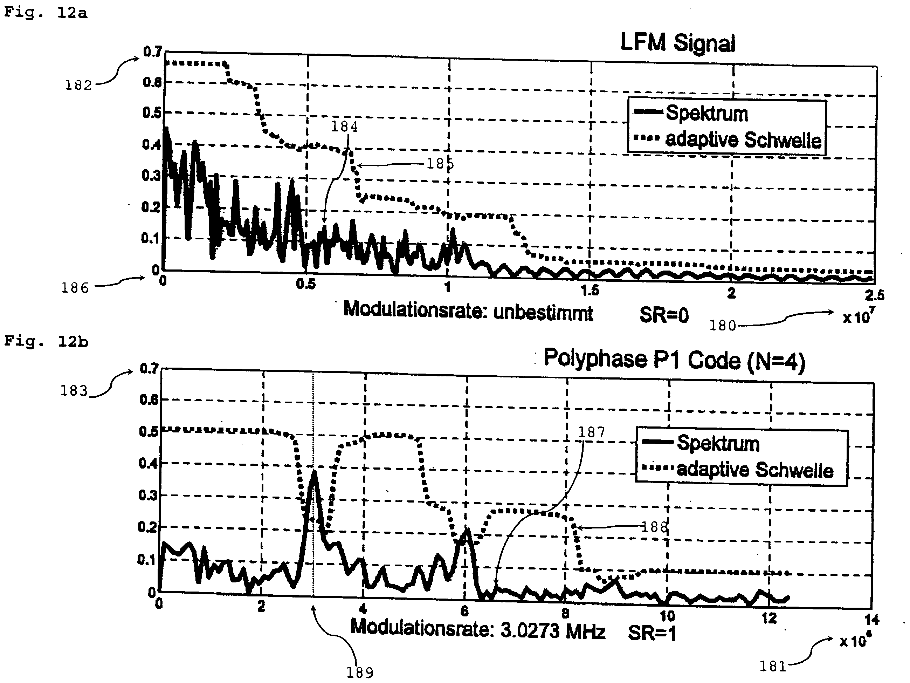

Abbildung 12a und 12b zeigen zwei Beispiele für die Ermittlung der Modulationsrate. Für die Modulationsratenbestimmung sind dabei die Parameter FFT-Länge N = 256, Länge des Beobachtungsfensters L = 32 = 2×16, Anzahl der Schutzzellen G = 8 = 2×4 und Gewichtungsfaktor $\alpha$ = 1,414 gewählt. In horizontaler Richtung 180, 181 ist dabei jeweils die Frequenz in MHz, in vertikaler Richtung 182, 183 eine normierte Leistung aufgetragen.

Fig. 12a ermittelt die Modulationsrate nach dem vorgestellten Verfahren für ein linear frequenzmoduliertes Signalspektrum 184. Der adaptive Schwellenwert 185 wird von dem Signalspektrum 184 nicht überschritten, d. h. SR= 0.

Fig. 12b ermittelt die Modulationsrate nach dem vorgestellten Verfahren für ein phasenmoduliertes Signalspektrum 186. Der Verlauf des adaptiven Schwellenwerts 188 wird für eine Modulationsrate 3,0273 MHz 189 von der Hüllkurve des Spektrums 187 überschritten. Der in diesem Beispiel verwendete Code ist ein Polyphasencode P1 mit N=4.

**Patentansprüche**

1. Verfahren zu einer Klassifizierung eines pulsförmigen Signals nach seiner Modulationsart mit den Verfahrensschritten:

   - Empfangen des Signals,
   - Erzeugen eines komplexen Basisbandsignals
   - Erzeugen einer Folge von Abtastwerten des komplexen Basisbandsignals,
   - Transformieren der Folge von Abtastwerten in den Frequenzbereich,
   - Bilden eines ersten Kennwerts auf Basis der in den Frequenzbereich transformierten Folge von Abtastwerten,
   - Erzeugen mindestens eines Zwischensignals mittels eines nichtlinearen Verarbeitungsschrittes aus der Folge von Abtastwerten des komplexen Basisbandsignals,
   - Transformieren des mindestens einen Zwischensignals in den Frequenzbereich,
   - Bilden mindestens eines weiteren Kennwerts aus dem mindestens einen Zwischensignal im Frequenzbereich,
   - Klassifizieren des pulsförmigen Signals auf Basis des ersten und wenigstens einen weiteren Kennwerts nach seiner Modulationsart,

   **dadurch gekennzeichnet,**
   **dass** der erste Kennwert und der mindestens eine weitere Kennwert die Wölbung einer statistischen Verteilung beschreiben, und

   **dass** mindestens ein erster Beurteilungswert aus dem ersten Kennwert und einem weiteren Kennwert gebildet wird, wobei der mindestens eine erste Beurteilungswert eine Veränderung des Spektrums des komplexen Basisbandsignals durch den nichtlinearen Verarbeitungsschritt beschreibt, und
   das Modulationsverfahren durch Auswertung des mindestens einen Beurteilungswerts ermittelt wird.

2. Verfahren nach Anspruch 1,
   **dadurch gekennzeichnet,**
   **dass** der erste Kennwert und weitere Kennwerte Kurtosiswerte sind.

3. Verfahren nach Anspruch 1,
   **dadurch gekennzeichnet,**
   **dass** der erste Kennwert und die weiteren Kennwerte Koeffizienten einer Diskreten Kosinustransformation sind, und wobei das abgetastetes Basisbandsignal und das mindestens eine Zwischensignal vor dem Bilden des ersten und des mindestens einen weiteren Kennwerts normiert werden.

4. Verfahren nach einem der Ansprüche 1 bis 2,
   **dadurch gekennzeichnet,**
   **dass** der erste Kennwert und die weiteren Kennwerte zur Klassifikation des pulsförmigen Signals nach dem Modulationsverfahren in einem Entscheidungsbaum oder in einem neuronalen Netz verwendet werden.

5. Verfahren nach einem der Ansprüche 1 bis 4,
   **dadurch gekennzeichnet,**
   **dass** das zu klassifizierende Signal ein pulsförmiges Signal kurzer Pulsdauer ist.

6. Verfahren nach Anspruch 5,

**dadurch gekennzeichnet,**
**dass** zur Klassifikation des pulsförmigen Signals nach seinem Modulationsverfahren ein weiterer Kennwert für die Symbolrate des pulsförmigen Signals ermittelt wird.

7. Verfahren nach Anspruch 5 oder 6,
**dadurch gekennzeichnet,**
**dass** zur Klassifikation des pulsförmigen Signals nach seinem Modulationsverfahren ein weiterer Kennwert durch die Berechnung eines Korrelationskoeffizienten des pulsförmigen Signals ermittelt wird.

8. Verfahren nach einem der Ansprüche 1 bis 7,
**dadurch gekennzeichnet,**
**dass** der erste und der mindestens eine weitere Kennwert geeignet ist, ein nichtmoduliertes Signal und/oder ein frequenzmoduliertes Signal und/oder ein diskret frequenzmoduliertes Signal und/oder ein Signal mit einer binären Phasenmodulation und/oder ein Signal mit einer Polyphasenmodulation zu erkennen.

9. Computerprogramm mit Programmcode-Mitteln, um alle Schritte gemäß einem der Ansprüche 1 bis 8 durchführen zu können, wenn das Programm auf einem Computer oder einem digitalen Signalprozessor ausgeführt wird.

10. Computerprogramm-Produkt mit auf einem maschinenlesbaren Datenträger gespeicherten Programmcode-Mitteln, um alle Schritte gemäß einem der Ansprüche 1 bis 8 durchführen zu können, wenn das Programm auf einem Computer oder einem digitalen Signalprozessor ausgeführt wird.

**Claims**

1. Method for classification of a pulsed signal according to its modulation type with the method steps:

   - reception of the signal,
   - generation of a complex base band signal,
   - generation of a sequence of sampled values of the complex base band signal,
   - transformation of the sequence of sampled values into the frequency domain,
   - formation of a first characteristic value on the basis of the sequence of sampled values transformed into the frequency domain,
   - generation of at least one intermediate signal by means of a non-linear processing step from the sequence of sampled values of the complex base band signal,
   - transformation of the at least one intermediate signal into the frequency domain,
   - formation of at least one further characteristic value from the at least one intermediate signal in the frequency domain,
   - classification of the pulsed signal on the basis of the first and at least one further characteristic value according to its modulation type,

   **characterised in that** the first characteristic value and the at least one further characteristic value describe the kurtosis or peakedness of a statistical distribution, and
   **in that** at least one first appraisal value is formed from the first characteristic value and a further characteristic value, wherein the at least one first appraisal value describes a change in the spectrum of the complex base band signal by the non-linear processing step, and
   **in that** the modulation method is determined by evaluating the at least one appraisal value.

2. Method according to claim 1,
   **characterised in that** the first characteristic value and further characteristic values are kurtosis values.

3. Method according to claim 1,
   **characterised in that** the first characteristic value and the further characteristic values are coefficients of a discrete cosine transformation, and wherein the sampled base band signal and the at least one intermediate signal are normed before the formation of the first and the at least one further characteristic value.

4. Method according to one of claims 1 to 2,
   **characterised in that** the first characteristic value and the further characteristic values are used for classification of the pulsed signal according to the modulation method in a decision tree or in a neural network.

5. Method according to one of claims 1 to 4,
   **characterised in that** the signal to be classified is a pulsed signal of short pulse duration.

6. Method according to claim 5,
   **characterised in that** for classification of the pulsed signal according to its modulation method a further characteristic value is determined for the symbol rate of the pulsed signal.

7. Method according to claim 5 or 6,
   **characterised in that** for classification of the pulsed signal according to its modulation method a further characteristic value is determined by the calculation of a correlation coefficient of the pulsed signal.

8. Method according to one of claims 1 to 7,
   **characterised in that** the first and the at least one further characteristic value is suitable for recognition of a non-modulated signal and/or a frequency-modulated signal and/or a discrete frequency-modulated signal and/or a signal with a binary phase modulation and/or a signal with a polyphase modulation.

9. Computer programme with programme code means to be able to carry out all the steps according to one of claims 1 to 8 when the programme is executed on a computer or a digital signal processor.

10. Computer programme product with programme code means stored on a machine-readable data storage medium to be able to carry out all the steps according to one of claims 1 to 8 when the programme is executed on a computer or a digital signal processor.

## Revendications

1. Procédé de classification d'un signal pulsé d'après son type de modulation, comprenant les étapes suivantes :

   - réception du signal,
   - génération d'un signal de bande de base complexe,
   - génération d'une séquence de valeurs de balayage du signal de bande de base complexe,
   - transformation de la séquence de valeurs de balayage dans la plage de fréquence,
   - formation d'une première valeur caractéristique sur la base de la séquence de valeurs de balayage transformée dans la plage de fréquence,
   - génération d'au moins un signal intermédiaire au moyen d'une phase de traitement non linéaire à partir de la séquence de valeurs de balayage du signal de bande de base complexe,
   - transformation dudit au moins un signal intermédiaire dans la plage de fréquence,
   - formation d'au moins une autre valeur caractéristique à partir dudit au moins un signal intermédiaire dans la plage de fréquence,
   - classification du signal pulsé d'après son type de modulation sur la base de la première, et d'au moins une autre valeur caractéristique,

   **caractérisé**
   **en ce que** la première valeur caractéristique et ladite au moins une autre valeur caractéristique décrivent la courbure d'une distribution statistique, et
   **en ce qu'**au moins une première valeur d'évaluation est formée à partir de la première valeur caractéristique et d'une autre valeur caractéristique, dans lequel ladite au moins une première valeur d'évaluation décrit une modification du spectre du signal de bande de base complexe par la phase de traitement non linéaire, et
   **en ce que** le processus de modulation est déterminé par analyse de ladite au moins une valeur d'évaluation.

2. Procédé selon la revendication 1,
   **caractérisé**
   **en ce que** la première valeur caractéristique et d'autres valeurs caractéristiques sont des valeurs de kurtosis.

3. Procédé selon la revendication 1,
   **caractérisé**

**en ce que** la première valeur caractéristique et les autres valeurs caractéristiques sont des coefficients d'une transformée en cosinus discrète, et dans lequel le signal de bande de base balayé et ledit au moins un signal intermédiaire sont normalisés avant formation de la première et de ladite au moins une autre valeur caractéristique.

4. Procédé selon l'une des revendications 1 à 2,
   **caractérisé**
   **en ce que** la première valeur caractéristique et les autres valeurs caractéristiques pour la classification du signal pulsé après le processus de modulation sont utilisées dans un arbre de décision ou dans un réseau neuronal.

5. Procédé selon l'une des revendications 1 à 4,
   **caractérisé**
   **en ce que** le signal à classifier est un signal pulsé à durée d'impulsion brève.

6. Procédé selon la revendication 5,
   **caractérisé**
   **en ce que** pour la classification du signal pulsé après son processus de modulation, une autre valeur caractéristique est déterminée pour le débit de symboles du signal pulsé.

7. Procédé selon la revendication 5 ou 6,
   **caractérisé**
   **en ce que** pour la classification du signal pulsé après son processus de modulation, une autre valeur caractéristique est déterminée par le calcul d'un coefficient de corrélation du signal pulsé.

8. Procédé selon l'une des revendications 1 à 7,
   **caractérisé**
   **en ce que** la première et ladite au moins une autre valeur caractéristique sont appropriées pour identifier un signal non modulé et/ou un signal modulé en fréquence et/ou un signal discret modulé en fréquence et/ou un signal à modulation de phase binaire et/ou un signal à modulation polyphasée.

9. Programme informatique à moyens de code programme permettant l'exécution de toutes les étapes selon l'une des revendications 1 à 8 quand ledit programme est exécuté sur un ordinateur ou un processeur de signal numérique.

10. Produit de programme informatique à moyens de code programme stockés sur un support de données lisible par machine, permettant l'exécution de toutes les étapes selon l'une des revendications 1 à 8, quand ledit programme est exécuté sur un ordinateur ou un processeur de signal numérique.

**Fig. 1a**

**Fig. 1b**

Fig. 2

**200**

Intrapulsanalyse

Fig. 3

Fig. 4

S41

S42

S43

S44

S45

S46

S47

S48

S49

Fig. 5

Fig. 6

EP 2 375 663 B1

## Fig. 7

$\frac{K_0}{K_1} < thresh_{01}$  **Ja**  **NEIN**  S701

$\frac{K_2}{K_1} > thresh_{21}$  **Ja**  **NEIN**  S702

$\frac{K_3}{K_1} > thresh_{31}$  **Ja**  **NEIN**  S703

$\frac{K_4}{K_1} > thresh_{41}$  **Ja**  **NEIN**  S704

$\frac{K_i}{K_1} > thresh_c$ UND SR = 1  **Ja**  **NEIN**  S705

$|R_{xy}| > thresh_{R_{xy}}$  **Ja**  **NEIN**  S706

$\frac{K_2}{K_1} > thresh_{0}$ UND SR = 0  **Ja**  **NEIN**  S707

$K_{FM} > 3 + thresh_{K_{FM}}$ UND SR = 1  **Ja**  **NEIN**  S708

$K_{FM} < 3 - thresh_{K_{FM}}$ UND SR = 0  **Ja**  **NEIN**  S709

| unmoduliert | S711 |

| PSK2 | S712 |

| PSK3 | S713 |

| PSK4 | S714 |

| PSKm | S715 |

| LFM | S716 |

| FM | S717 |

| PSKm | S718 |

| FM | S719 |

| unbekannt | S720 |

700

Fig. 8a

Fig. 8b

**Fig. 8c**

**Fig. 8d**

**Fig. 9a**

**Fig. 9b**

## Fig. 9c

## Fig. 9d

Fig. 10

Fig. 11

$$S_k = \frac{1}{L} \sum_{n=1}^{L} b_n$$

$$V_k = \max\{b_L, \ldots, b_{(L/2)+1}, b_{(L/2)}, \ldots, b_1\}$$

EP 2 375 663 B1

Fig. 12a

**LFM Signal**

182

184

185

186

Modulationsrate: unbestimmt    SR=0    180    x 10⁷

Fig. 12b

**Polyphase P1 Code (N=4)**

183

187

188

Modulationsrate: 3.0273 MHz    SR=1

189

181    x 10⁶

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19746507 A1
- DE 4223141 A1
- US 7428270 B1


**In der Beschreibung aufgeführte Nicht-Patentliteratur**

- Identification of Wavelet Modulation Based on Gaussian Detection and Kurtosis of Power Spectrum. **XIANGHONG TANG et al.** Communications and Mobile Computing. IEEE, 06. Januar 2009, 181-185
- **J. LUNDEN ; V. KOIVUNEN.** Automatic Radar Waveform Recognition. *IEEE Journal of selected topics in signal processing,* Juni 2007, vol. 1 (1